# EUROPEAN PATENT APPLICATION

(11) **EP 4 760 954 A1**
(43) Date of publication of application: **17.06.2026**
(21) Application number: 24853607.0
(22) Date of filing: 06.08.2024
(51) Int. Cl.: H01M 50/449, H01M 50/46, H01M 10/0525

(54) **BATTERY, AND ELECTROCHEMICAL DEVICE AND ELECTRONIC DEVICE COMPRISING SAME**

(30) Priority: 11.08.2023 CN 202311017486
(71) Applicant: Ningde Amperex Technology Limited, Ningde, Fujian 352100 (CN)
(72) Inventor: FAN, Xiaohe, Ningde, Fujian 352100 (CN); WEI, Zengbin, Ningde, Fujian 352100 (CN); TAO, Xinghua, Ningde, Fujian 352100 (CN)
(74) Representative: Kraus & Lederer PartGmbB
(86) International application number: PCT/CN2024/110005
(87) International publication number: WO 2025/036196

(57) **Abstract**

A battery, an electrochemical device containing same, and an electronic device are provided. The battery includes an electrode assembly and a packaging bag. The electrode assembly includes an electrode plate and a separator. The separator includes a porous substrate. A first coating layer is disposed on at least one surface of the porous substrate. The first coating layer includes a first polymer and a second polymer that melt at different melting points. The battery satisfies: 0.077 ≤ (3.0 - D₂/D₁)/T ≤ 0.118, thereby endowing the battery with superior electrochemical performance, a relatively wide hot-oven window, and a relatively high hot-oven test pass rate.

## Description

This application claims priority to Chinese Patent Application No. 202311017486.5, filed with China National Intellectual Property Administration on August 11, 2023 and entitled "BATTERY, ELECTROCHEMICAL DEVICE CONTAINING SAME, AND ELECTRONIC DEVICE", which is incorporated herein by reference in its entirety.

### TECHNICAL FIELD

This application relates to the field of electrochemical technology, and in particular, to a battery, an electrochemical device containing same, and an electronic device.

### BACKGROUND

Fast charging and high energy density are major trends in battery development. With the rapid rise in the charge rate and the increase in the energy density of batteries, a hot-oven window of a battery is increasingly narrower. Currently, improving the hot-oven test pass rate usually compromises the electrochemical performance of the battery during normal use. Therefore, how to broaden the hot-oven window and improve the hot-oven test pass rate of the battery without compromising the electrochemical performance of the battery during normal use has become a pressing technical challenge to a person skilled in the art.

### SUMMARY

This application provides a battery, an electrochemical device containing same, and an electronic device, and endows the battery with superior electrochemical performance, a relatively wide hot-oven window, and a relatively high hot-oven test pass rate.

A first aspect of this application provides a battery. The battery includes an electrode assembly and a packaging bag. The electrode assembly includes an electrode plate and a separator.

The separator includes a porous substrate, a first coating layer is disposed on at least one surface of the porous substrate, and the first coating layer includes a first polymer and a second polymer that melt at different melting points.

The battery satisfies: 0.077 ≤ (3.0 - D₂/D₁)/T ≤ 0.118, where D₁ is a thickness of the battery measured after the battery is fully charged at 25 °C, in units of mm; D₂ is a thickness of the battery measured again after the fully charged battery is placed vertically in a hot oven, heated at a rate of 5 °C/min from 25 °C to 130 °C and kept at 130°C for 60 minutes; then allowed to stand until a temperature of the battery drops to 25 °C, in units of mm; and T is an adhesion force between the first coating layer of the separator and an electrode plate adjacent to the first coating layer at the temperature of 25 °C, in units of N/m.

The battery that satisfies 0.077 ≤ (3.0 - D₂/D₁)/T ≤ 0.118 can achieve a relatively wide hot-oven window, a relatively high hot-oven test pass rate, and superior electrochemical performance.

When the battery satisfying 0.077 ≤ (3.0 - D₂/D₁)/T ≤ 0.118 is in a heat generation stage, an interface between the electrode plate and the separator can be fully opened, thereby enabling timely transmission of the gas and heat at the interface into the packaging bag, reducing heat accumulation at the interface, and consequently widening the hot-oven window of the battery and improving the hot-oven test pass rate of the battery.

The battery that satisfies 0.077 ≤ (3.0 - D₂/D₁)/T ≤ 0.118 also achieves appropriate interfacial adhesiveness in a normal use state, thereby reducing the probability of deformation of the electrode assembly after charge-and-discharge cycling of the battery, and consequently endowing the battery with superior electrochemical performance.

In any embodiment, the electrode plate includes a positive electrode plate and a negative electrode plate. The first coating layer is disposed on one surface of the porous substrate, the surface facing the positive electrode plate.

In any embodiment, the battery satisfies: 0.096 ≤ (3.0 - D₂/D₁)/T ≤ 0.110. By further setting (3.0-D₂/D₁)/T to fall within the above range, this application makes the battery more capable of achieving superior electrochemical performance and a relatively high hot-oven test pass rate concurrently.

In any embodiment, T is 5.42 N/m to 10.23 N/m; and/or D₂/D₁ is 2.12 to 2.42.

In any embodiment, T is 5.91 N/m to 7.91 N/m; and/or D₂/D₁ is 2.21 to 2.38.

By setting the adhesion force T between the first coating layer of the separator and the electrode plate adjacent to the first coating layer to fall within the above range, this application endows the battery with appropriate interface adhesiveness during normal use, thereby reducing the probability of deformation of the electrode assembly after charge-and-discharge cycling of the battery, and consequently endowing the battery with superior electrochemical performance. By setting the adhesion force T between the first coating layer of the separator and the electrode plate adjacent to the first coating layer to fall within the above range, this application makes it convenient to fully open the interface between the electrode plate and the separator when the battery is in a heat generation stage, thereby enabling timely transmission of the gas and heat at the interface into the packaging bag, reducing heat accumulation at the interface, and consequently widening the hot-oven window of the battery and improving the hot-oven test pass rate of the battery.

When D₂/D₁ falls within the above range, it indicates that the interface between the electrode plate and the separator can be fully opened when the battery is in a heat generation stage, thereby enabling timely transmission of the gas and heat at the interface into the packaging bag, reducing heat accumulation at the interface, and consequently widening the hot-oven window of the battery and improving the hot-oven test pass rate of the battery.

In any embodiment, a melting point of the first polymer is denoted as Tₘ₁, a melting point of the second polymer is denoted as Tₘ₂, Tₘ₁ is 60 °C to 100 °C, Tₘ₂ is greater than or equal to 130 °C, and Tₘ₂-Tₘ₁ is 40 °C to 120 °C. By setting the melting point Tₘ₁ of the first polymer, the melting point Tₘ₂ of the second polymer, and Tₘ₂-Tₘ₁ to fall within the above ranges, this application endows the battery with superior electrochemical performance, widens the hot-oven window of the battery, and improves the hot-oven test pass rate of the battery.

In any embodiment, Tₘ₁ is 70 °C to 90 °C, Tₘ₂ is 135 °C to 160 °C, and Tₘ₂-Tₘ₁ is 50 °C to 80 °C. This improves the electrochemical performance of the battery, further widens the hot-oven window of the battery, and further improves the hot-oven test pass rate of the battery.

In any embodiment, a volume distribution particle size Dv₍₁₎50 of particles of the first polymer and a volume distribution particle size Dv₍₂₎50 of particles of the second polymer satisfy: 0.50 ≤ Dv₍₂₎50/Dv₍₁₎50 ≤ 1.25, and a volume distribution particle size Dv₍₁₎90 of the particles of the first polymer and the volume distribution particle size Dv₍₂₎50 of the particles of the second polymer satisfy: 2.0 ≤ Dv₍₁₎90/Dv₍₂₎50 ≤ 5.0.

In any embodiment, 0.60 ≤ Dv₍₂₎50/Dv₍₁₎50 ≤ 0.83, and 3.00 ≤ Dv₍₁₎90/Dv₍₂₎50 ≤ 4.17.

By setting Dv₍₂₎50/Dv₍₁₎50 and Dv₍₁₎90/Dv₍₂₎50 to fall within the above range, this application makes it convenient to disperse the second polymer around the first polymer, improves the film formation of the first polymer, and favorably endows the first coating layer with appropriate adhesiveness and air permeability concurrently, thereby enabling the battery to achieve superior electrochemical performance and a relatively high hot-oven test pass rate.

In any embodiment, a volume distribution particle size Dv₍₁₎50 of particles of the first polymer is 0.8 µm to 2.0 µm.

In any embodiment, a volume distribution particle size Dv₍₁₎90 of particles of the first polymer is 2.0 µm to 5.0 µm.

By setting the volume distribution particle sizes Dv₍₁₎50 and/or Dv₍₁₎90 of the particles of the first polymer to fall within the above ranges, this application endows the first coating layer with appropriate adhesiveness and air permeability concurrently, thereby enabling the battery to achieve superior electrochemical performance and a relatively high hot-oven test pass rate.

In any embodiment, a volume distribution particle size Dv₍₂₎50 of particles of the second polymer is 0.54 µm to 1.5 µm.

By setting the volume distribution particle size Dv₍₂₎50 of the particles of the second polymer to fall within the above range, this application endows the first coating layer with appropriate adhesiveness and air permeability concurrently, thereby enabling the battery to achieve superior electrochemical performance and a relatively high hot-oven test pass rate.

In any embodiment, a mass percent of the first polymer is denoted as m1, and a mass percent of the second polymer is denoted as m2. Based on a total mass of the first coating layer, m1 is 50% to 86%, and m2 is 9% to 45%.

In any embodiment, m1 is 70% to 82%, and m2 is 13% to 25%.

By setting the mass percent m1 of the first polymer and the mass percent m2 of the second polymer to fall within the above ranges, this application achieves appropriate adhesion between the separator and the electrode plate, and makes it convenient to fully open the interface between the electrode plate and the separator when the battery is in a heat generation stage, thereby enabling timely transmission of the gas and heat at the interface into the packaging bag, reducing heat accumulation at the interface, and consequently widening the hot-oven window of the battery and improving the hot-oven test pass rate of the battery. This also endows the first coating layer with appropriate adhesiveness and air permeability concurrently, and enables the battery to achieve superior electrochemical performance.

In any embodiment, a weight-average molecular weight of the first polymer is denoted as M_{w1}, a weight-average molecular weight of the second polymer is denoted as M_{w2}, M_{w1} is 150,000 to 260,000, and M_{w2} is 1,180,000 to 2,000,000.

By setting M_{w1} and M_{w2} to fall within the above ranges, this application improves the electrochemical performance of the battery, further widens the hot-oven window of the battery, and further improves the hot-oven test pass rate of the battery.

In any embodiment, the first polymer includes at least one of a homopolymer or a copolymer of at least one monomer selected from ethylene, propylene, vinylidene fluoride, acrylic acid, acrylic ester, styrene, acrylonitrile, maleic anhydride, vinyl chloride, or allyl chloride.

In any embodiment, the second polymer includes at least one of a homopolymer or a copolymer of at least one monomer selected from vinylidene fluoride, hexafluoropropylene, propylene, vinyl chloride, styrene, butadiene, acrylate ester, or acrylic acid.

In any embodiment, a first coating layer is disposed on one surface of the porous substrate, and a second coating layer is disposed on another surface of the porous substrate. The second coating layer includes a third polymer. The third polymer includes at least one of a homopolymer or a copolymer of at least one monomer selected from butyl acrylate, octyl acrylate, isooctyl acrylate, styrene, or butadiene. A melting point of the third polymer is 50 °C to 70 °C. This can reduce the probability of deformation of the electrode assembly after charge-and-discharge cycling of the battery, thereby endowing the battery with superior electrochemical performance.

In any embodiment, a coating weight of the first coating layer is 0.5 mg/5000 mm² to 3 mg/5000 mm²; or

By setting the coating weight of the first coating layer to fall within the above range, this application endows the first coating layer with appropriate adhesiveness, that is, makes the first coating layer highly adhesive when the battery is in normal use while making the first coating layer less adhesive when the battery is in a heat generation stage. This makes it convenient to fully open the interface between the electrode plate and the separator when the battery is in a heat generation stage, thereby enabling timely transmission of the gas and heat at the interface into the packaging bag, reducing heat accumulation at the interface, and consequently widening the hot-oven window of the battery and improving the hot-oven test pass rate of the battery. This also reduces the probability of deformation of the electrode assembly after charge-and-discharge cycling of the battery, thereby also enabling the battery to achieve superior electrochemical performance.

In any embodiment, a thickness of the first coating layer is 0.5 µm to 2.8 µm.

By setting the thickness of the first coating layer to fall within the above range, this application endows the first coating layer with appropriate adhesiveness, that is, makes the first coating layer highly adhesive when the battery is in normal use while making the first coating layer less adhesive when the battery is in a heat generation stage. This makes it convenient to fully open the interface between the electrode plate and the separator when the battery is in a heat generation stage, thereby enabling timely transmission of the gas and heat at the interface into the packaging bag, reducing heat accumulation at the interface, and consequently widening the hot-oven window of the battery and improving the hot-oven test pass rate of the battery. This also reduces the probability of deformation of the electrode assembly after charge-and-discharge cycling of the battery, thereby enabling the battery to achieve superior electrochemical performance.

In any embodiment, the battery is a pouch battery.

In any embodiment, the positive electrode plate includes a positive active material. The positive active material includes at least one of lithium cobalt oxide, lithium nickel cobalt aluminum oxide, lithium nickel cobalt manganese oxide, lithium iron phosphate, or respective modified compounds thereof. The modification includes doping modification, surface coating modification, and doping-and-coating modification.

In any embodiment, the negative electrode plate includes a negative active material. The negative active material includes at least one of graphite or a silicon-based material. A mass percent of the silicon-based material in the negative active material is 0% to 25%.

A second aspect of this application provides an electrochemical device. The electrochemical device contains the battery according to the first aspect of this application.

A third aspect of this application provides an electronic device. The electronic device includes the battery according to the first aspect of this application and/or the electrochemical device according to the second aspect of this application.

### DETAILED DESCRIPTION

To make the objectives, technical solutions, and advantages of this application clearer, the following gives a clear and comprehensive description of the technical solutions of this application with reference to embodiments. Evidently, the described embodiments are merely a part of but not all of the embodiments of this application. The embodiments described herein are illustrative in nature, and are intended to enable a basic understanding of this application. No embodiment of this application is to be construed as a limitation on this application. All other embodiments derived by a person skilled in the art based on the technical solutions and embodiments provided herein without making any creative efforts still fall within the protection scope of this application.

For brevity, some specific numerical ranges are disclosed herein for illustrative purpose only. However, any lower limit may be combined with any upper limit to form an unspecified range, any lower limit may be combined with any other lower limit to form an unspecified range, and any upper limit may be combined with any other upper limit to form an unspecified range. In addition, each separately disclosed point or single numerical value may be used as a lower limit or upper limit to combine with any other point or other single numerical value or with any other lower or upper limit to form an unspecified range.

In the description of this application, unless otherwise specified, a numerical value qualified by "at least" or "at most" includes this numerical value.

Unless otherwise specified, the terms used in this application have the well-known meanings commonly understood by a person skilled in the art. Unless otherwise specified, the value of a parameter mentioned in this application may be measured by various measurement methods commonly used in the art (for example, may be tested according to the method described in an embodiment of this application). Unless otherwise noted, for parameters mentioned herein, the test temperature is 25 °C, and the test pressure is standard atmospheric pressure.

A list of items referred to by the terms such as "at least one of", "at least one thereof", "at least one type of' may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single component or a plurality of components. The item B may include a single component or a plurality of components. The item C may include a single component or a plurality of components.

The term "a plurality of' means two or more.

The battery referred to herein may include any device in which an electrochemical reaction occurs. In some embodiments, the battery may include a lithium-ion battery.

A hot-oven failure process of a battery may be divided into three stages: a heat generation stage, a heat accumulation stage, and a thermal runaway stage. Thermal runaway involves complex reactions, primarily including the decomposition of a solid electrolyte interface (hereinafter referred to as SEI) film, reactions between a positive electrode and an electrolyte solution, reactions between a negative electrode and an electrolyte solution, decomposition reactions of the electrolyte solution itself, and the like.

In the heat generation stage, the decomposition of the SEI film generates heat, and brings about initial heat accumulation of the battery. The heat keeps accumulating so that the battery reaches a heat accumulation stage. In the heat accumulation stage, the SEI film keeps decomposing, so that the electrolyte solution is continuously reduced, thereby leading to a reaction between the positive electrode and the electrolyte solution. In this stage, the battery expels gas and may produce a large amount of smoke. The continuous accumulation of heat leads to entry to a thermal runaway stage. In the thermal runaway stage, the positive electrode and the negative electrodes react rapidly, causing the temperature to rise sharply, and possibly causing combustion or even explosion of the battery.

Currently, strategies commonly used to widen the hot-oven window of a battery and improve the hot-oven test pass rate of the battery include: adjusting the composition of an electrolyte system, and applying a low-adhesion coating layer onto the surface of the separator. However, the adjustment of the composition of the electrolyte system is prone to affect the electrochemical performance of the battery during normal use; and applying a low-adhesion coating layer onto the surface of the separator is prone to reduce the interfacial adhesiveness of the battery, thereby being prone to cause deformation of the electrode assembly after charge-and-discharge cycling of the battery, and consequently affecting the electrochemical performance, such as cycle performance, of the battery during normal use.

An embodiment of this application provides a battery, and endows the battery with superior electrochemical performance, a relatively wide hot-oven window, and a relatively high hot-oven test pass rate.

The battery provided in this embodiment of this application includes an electrode assembly and a packaging bag.

The electrode assembly includes an electrode plate and a separator. The separator includes a porous substrate. A first coating layer is disposed on at least one surface of the porous substrate. The first coating layer includes a first polymer and a second polymer that melt at different melting points.

The battery satisfies: 0.077 ≤ (3.0 - D₂/D₁)/T ≤ 0.118, where D₁ is a thickness of the battery measured after the battery is fully charged at 25 °C, in units of mm; D₂ is a thickness of the battery measured again after the fully charged battery is placed vertically in a hot oven, heated at a rate of 5 °C/min from 25 °C to 130 °C and kept at 130°C for 60 minutes; then allowed to stand until a temperature of the battery drops to 25 °C, in units of mm; and T is an adhesion force between the first coating layer of the separator and an electrode plate adjacent to the first coating layer at the temperature of 25 °C, in units of N/m.

The thickness direction of the battery is perpendicular to a main surface of the battery (that is, the largest surface of the battery).

The thickness D₁ of the battery may be measured in the following steps: leaving the battery to stand for 5 minutes at 25 °C, charging the battery at a constant current of 0.5C until the voltage of the battery reaches a charge voltage limit, in which the cut-off current is 0.025C; and then charging the battery at a constant voltage until the charge current is less than or equal to the cut-off current; and then leaving the battery to stand for 60 minutes, and measuring the thickness of the battery, denoted as D₁.

The adhesion force T between the first coating layer of the separator and the electrode plate adjacent to the first coating layer may be measured in the following steps: Cooling a battery, which has been subjected to a hot-oven test, to 25 °C, and disassembling the battery and taking out a separator and an electrode plate together out of the battery, and then measuring the adhesion force T between the first coating layer of the separator and the electrode plate adjacent to the first coating layer with reference to the 180° peel test standard, and the test standard may be GB/T 2790-1995. The test instrument may be a tensile testing machine. After the test, a ratio of the average force in a plateau of the peel force curve to the width of the sample may be used as an adhesion force T between the first coating layer of the separator and the electrode plate adjacent to the first coating layer. The tensile speed (that is, peeling speed) of the tensile testing machine is 50 mm/min. The test temperature is 25 °C.

During a 180° peel test, the separator and electrode plate, which are taken out together from the disassembled battery, may be cut into 15 mm×54.2 mm strips for testing.

The film-forming properties and adhesiveness of a polymer usually vary depending on the melting point of the polymer. Generally, a low-melting polymer is superior in film-forming properties and adhesiveness. When the low-melting polymer is applied to the first coating layer of the separator, the polymer in the first coating layer of the separator is at high risk of softening and pore clogging during preparation of the battery (such as baking, hot pressing, or chemical formation of the electrode assembly, or other processes) and during normal use of the battery, thereby affecting the electrochemical performance of the battery. The first coating layer of the separator provided in this embodiment of this application includes a first polymer and a second polymer that melt at different melting points. With the polymers of different film-forming properties and/or adhesiveness being used in combination, the high-melting polymer can be dispersed around the low-melting polymer, thereby reducing the risk of softening and pore clogging of the polymer in the first coating layer of the separator during preparation of the battery (such as baking, hot pressing, or chemical formation of the electrode assembly, or other processes) and during normal use of the battery, and also endowing the first coating layer with appropriate adhesiveness and air permeability concurrently.

The adhesion force T between the first coating layer of the separator and the electrode plate adjacent to the first coating layer can reflect the adhesion properties between the first coating layer of the separator and the electrode plate adjacent to the first coating layer during normal use of the battery. An increase in the adhesion force T between the first coating layer of the separator and the electrode plate adjacent to the first coating layer can reduce the probability of deformation of the electrode assembly after charge-and-discharge cycling of the battery, but is adverse to fully opening the interface between the electrode plate and the separator when the battery is in a heat generation stage, thereby being adverse to reducing heat accumulation at the interface.

D₂/D₁ reflects the thickness change before and after the hot-oven test of the fully charged battery. When D₂/D₁ is relatively large, it means that the interface between the electrode plate and the separator can be fully opened when the battery is in the heat generation stage, but the adhesion force between the first coating layer of the separator and the electrode plate adjacent to the first coating layer may be relatively low when the battery is in normal use, thereby increasing the probability of deformation of the electrode assembly after charge-and-discharge cycling of the battery, and deteriorating the electrochemical performance of the battery. When D₂/D₁ is relatively small, it means that the interface between the electrode plate and the separator is unable to be opened or sufficiently opened when the battery is in the heat generation stage, thereby being adverse to reducing heat accumulation at the interface.

The battery that satisfies 0.077 ≤ (3.0 - D₂/D₁)/T ≤ 0.118 can achieve a relatively wide hot-oven window, a relatively high hot-oven test pass rate, and superior electrochemical performance.

When the battery satisfying 0.077 ≤ (3.0 - D₂/D₁)/T ≤ 0.118 is in a heat generation stage, an interface between the electrode plate and the separator can be fully opened, thereby enabling timely transmission of the gas and heat at the interface into the packaging bag, reducing heat accumulation at the interface, and consequently widening the hot-oven window of the battery and improving the hot-oven test pass rate of the battery.

The battery that satisfies 0.077 ≤ (3.0 - D₂/D₁)/T ≤ 0.118 also achieves appropriate interfacial adhesiveness in a normal use state, thereby reducing the probability of deformation of the electrode assembly after charge-and-discharge cycling of the battery, and consequently endowing the battery with superior electrochemical performance.

For a battery that satisfies the condition of (3.0-D₂/D₁)/T being less than 0.077, the adhesion force T between the first coating layer of the separator and the electrode plate adjacent to the first coating layer is relatively large after the hot-oven test. When the battery is in a heat generation stage, the adhesion force between the first coating layer of the separator and the electrode plate is relatively large, thereby making the interface between the electrode plate and the separator unable to be opened or sufficiently opened. Consequently, the gas and heat at the interface are unable to be transmitted into the packaging bag in time, and heat keeps accumulating at the interface. Therefore, the hot-oven test pass rate of the battery that satisfies the condition of (3.0-D₂/D₁)/T being less than 0.077 is relatively low. For a battery that satisfies the condition of (3.0-D₂/D₁)/T being less than 0.077, the adhesion force T between the first coating layer of the separator and the electrode plate adjacent to the first coating layer is relatively large after the hot-oven test. This also indicates that the design of the first coating layer of the separator is unreasonable, the adhesion of the first polymer and/or the second polymer in the first coating layer is excessively strong, and the fluidity of the first polymer and/or the second polymer after softening by heat is relatively high. This also leads to a relatively high risk of pore clogging in the separator during preparation of the battery (for example, baking, hot pressing, or chemical formation of the electrode assembly, or other processes) and during normal use of the battery, thereby affecting the electrochemical performance of the battery.

For a battery that satisfies the condition of (3.0-D₂/D₁)/T being greater than 0.118, the adhesion force T between the first coating layer of the separator and the electrode plate adjacent to the first coating layer is relatively low after the hot-oven test. This indicates that the interfacial adhesion during normal use of the battery is inferior, and the electrode assembly is prone to deformation after charge-and-discharge cycling of the battery, thereby affecting the electrochemical performance of the battery during normal use. For a battery that satisfies the condition of (3.0-D₂/D₁)/T being greater than 0.118, the interface between the electrode plate and the separator is prone to be unable to be opened or sufficiently opened when the battery is in a heat generation stage. Consequently, the gas and heat at the interface are unable to be transmitted into the packaging bag in time, so that the heat keeps accumulating at the interface. Therefore, the hot-oven test pass rate of the battery that satisfies the condition of (3.0-D₂/D₁)/T being greater than 0.118 is still relatively low.

In some embodiments, the battery satisfies 0.088 ≤ (3.0 - D₂/D₁)/T ≤ 0.118, 0.090 ≤ (3.0 - D₂/D₁)/T ≤ 0.115, 0.092 ≤ (3.0 - D₂/D₁)/T ≤ 0.113, 0.094 ≤ (3.0 - D₂/D₁)/T / T ≤ 0.113, or 0.096 ≤ (3.0 - D₂/D₁)/T ≤ 0.110.

By further setting (3.0-D₂/D₁)/T to fall within the above range, this application makes the battery more capable of achieving superior electrochemical performance and a relatively high hot-oven test pass rate concurrently.

In some embodiments, the electrode plate includes a positive electrode plate and a negative electrode plate. The first coating layer is disposed on one surface of the porous substrate, the surface facing the positive electrode plate.

In some embodiments, the adhesion force T between the first coating layer of the separator and the electrode plate adjacent to the first coating layer may be 5.42 N/m to 10.23 N/m, for example, may be 5.42 N/m, 5.56 N/m, 5.72 N/m, 5.91 N/m, 6.04 N/m, 6.16 N/m, 6.40 N/m, 6.58 N/m, 6.78 N/m, 6.92 N/m, 7.06 N/m, 7.20 N/m, 7.41 N/m, 7.56 N/m, 7.68 N/m, 7.80 N/m, 7.91 N/m, 8.10 N/m, 8.39 N/m, 8.68 N/m, 8.88 N/m, 9.10 N/m, 9.82 N/m, 10.11 N/m, 10.23 N/m, or a value falling within a range formed by any two thereof. Optionally, the adhesion force T between the first coating layer of the separator and the electrode plate adjacent to the first coating layer may be 5.91 N/m to 7.91 N/m.

By setting the adhesion force T between the first coating layer of the separator and the electrode plate adjacent to the first coating layer to fall within the above range, this application endows the battery with appropriate interface adhesiveness during normal use, thereby reducing the probability of deformation of the electrode assembly after charge-and-discharge cycling of the battery, and consequently endowing the battery with superior electrochemical performance. By setting the adhesion force T between the first coating layer of the separator and the electrode plate adjacent to the first coating layer to fall within the above range, this application makes it convenient to fully open the interface between the electrode plate and the separator when the battery is in a heat generation stage, thereby enabling timely transmission of the gas and heat at the interface into the packaging bag, reducing heat accumulation at the interface, and consequently widening the hot-oven window of the battery and improving the hot-oven test pass rate of the battery.

For example, the value of D₂/D₁ falls within a range of 2.12 to 2.42, and may be 2.12, 2.15, 2.17, 2.20, 2.21, 2.23, 2.25, 2.27, 2.29, 2.31, 2.35, 2.38, 2.40, 2.42, or a value falling within a range formed by any two thereof. Optionally, D₂/D₁ may be 2.21 to 2.38.

When D₂/D₁ falls within the above range, it indicates that the interface between the electrode plate and the separator can be fully opened when the battery is in a heat generation stage, thereby enabling timely transmission of the gas and heat at the interface into the packaging bag, reducing heat accumulation at the interface, and consequently widening the hot-oven window of the battery and improving the hot-oven test pass rate of the battery.

The parameters D₂/D₁ and T can be adjusted by adjusting the parameters such as the melting point, volume distribution particle size, weight-average molecular weight, and mass percent of the first polymer and the second polymer, as well as parameters such as the coating weight and thickness of the first coating layer.

In some embodiments, a melting point of the first polymer is denoted as Tₘ₁, a melting point of the second polymer is denoted as Tₘ₂, Tₘ₁ may be 60 °C to 100 °C, Tₘ₂ may be greater than or equal to 130 °C, and Tₘ₂-Tₘ₁ may be 40 °C to 120 °C.

When the melting point Tₘ₁ of the first polymer in the first coating layer falls within the above range, the first coating layer is endowed with superior film-forming properties and appropriate adhesiveness, that is, the first coating layer is highly adhesive when the battery is in normal use and is less adhesive when the battery is in a heat generation stage. This reduces the probability of deformation of the electrode assembly after charge-and-discharge cycling of the battery, thereby endowing the battery with superior electrochemical performance. This also enables the interface between the electrode plate and the separator to be fully opened when the battery is in a heat generation stage, enables timely transmission of the gas and heat at the interface into the packaging bag, and reduces heat accumulation at the interface, thereby widening the hot-oven window of the battery and improving the hot-oven test pass rate of the battery.

When the melting point Tₘ₂ of the second polymer in the first coating layer falls within the above range, the first coating layer is endowed with appropriate air permeability, thereby enabling the battery to achieve superior electrochemical performance.

By setting Tₘ₂-Tₘ₁ to fall within the above range, the second polymer can be dispersed around the first polymer, thereby reducing the risk of softening and pore clogging of the polymer in the first coating layer of the separator during preparation of the battery (such as baking, hot pressing, or chemical formation of the electrode assembly, or other processes) and during normal use of the battery, and consequently enabling the battery to achieve superior electrochemical performance. This also makes it convenient for the interface between the electrode plate and the separator to be fully opened when the battery is in a heat generation stage, enables timely transmission of the gas and heat at the interface into the packaging bag, and reduces heat accumulation at the interface, thereby widening the hot-oven window of the battery and improving the hot-oven test pass rate of the battery.

Therefore, by setting the melting point Tₘ₁ of the first polymer, the melting point Tₘ₂ of the second polymer, and Tₘ₂-Tₘ₁ to fall within the above ranges, this application endows the battery with superior electrochemical performance, widens the hot-oven window of the battery, and improves the hot-oven test pass rate of the battery.

When the melting point Tₘ₁ of the first polymer is relatively high, the first coating layer is inferior in adhesiveness and film-forming properties during normal use of the battery, thereby reducing the interfacial adhesiveness of the battery, and making the electrode assembly prone to deformation after charge-and-discharge cycling of the battery, and consequently affecting the electrochemical performance of the battery during normal use. In addition, when the melting point Tₘ₁ of the first polymer is relatively high, the first polymer is softened by heat when the battery is in a heat generation stage, thereby increasing the adhesion force between the first coating layer of the separator and the electrode plate, and making it inconvenient to fully open the interface between the electrode plate and the separator. Consequently, the gas and heat at the interface are unable to be transmitted into the packaging bag in time, thereby keeping the heat accumulating at the interface, and resulting in a low hot-oven test pass rate of the battery.

When the melting point Tₘ₁ of the first polymer is relatively low, the fluidity of the first polymer is relatively high after the first polymer is softened by heat during preparation of the battery (such as baking, hot pressing, or chemical formation of the electrode assembly, or other processes) and during normal use of the battery, thereby leading to a relatively high risk of pore clogging of the separator, and consequently affecting the electrochemical performance of the battery during normal use.

When the melting point Tₘ₂ of the second polymer is relatively low, the fluidity of the second polymer is relatively high after the second polymer is softened by heat during preparation of the battery (such as baking, hot pressing, or chemical formation of the electrode assembly, or other processes) and during normal use of the battery. Consequently, the risk of pore clogging in the separator is relatively high, thereby affecting the electrochemical performance of the battery during normal use. In addition, when the melting point Tₘ₂ of the second polymer is relatively low, the second polymer is softened by heat when the battery is in a heat generation stage, thereby increasing the adhesion force between the first coating layer of the separator and the electrode plate adjacent to the first coating layer. This makes it inconvenient to fully open the interface between the electrode plate and the separator, and makes the gas and heat at the interface unable to be transmitted into the packaging bag in time, thereby keeping the heat accumulating at the interface, and resulting in a low hot-oven test pass rate of the battery.

When Tₘ₂-Tₘ₁ is relatively small, it is inconvenient to disperse the second polymer around the first polymer, thereby increasing the risk of pore clogging of the separator during preparation of the battery (such as baking, hot pressing, or chemical formation of the electrode assembly, or other processes) and during normal use of the battery, and consequently affecting the electrochemical performance of the battery during normal use. This also makes it inconvenient for the interface between the electrode plate and the separator to be fully opened when the battery is in a heat generation stage, frustrates timely transmission of the gas and heat at the interface into the packaging bag, and keeps the heat accumulating at the interface, thereby resulting in a low hot-oven test pass rate of the battery.

In some embodiments, the melting point of the first polymer is denoted as Tₘ₁, the melting point of the second polymer is denoted as Tₘ₂, Tₘ₁ may be 70 °C to 90 °C, Tₘ₂ may be 135 °C to 160 °C, and Tₘ₂-Tₘ₁ may be 50 °C to 80 °C.

This improves the electrochemical performance of the battery, further widens the hot-oven window of the battery, and further improves the hot-oven test pass rate of the battery.

The method for adjusting the melting points of the first polymer and the second polymer is not particularly limited herein, as long as the objectives of this application can be achieved. For example, the melting points of the first polymer and the second polymer may be adjusted by adjusting one or more of the weight-average molecular weight, crystallinity, or the composition or mass ratio of copolymerizing monomers.

In some embodiments, the volume distribution particle size Dv₍₁₎50 of particles of the first polymer and the volume distribution particle size Dv₍₂₎50 of particles of the second polymer satisfy: 0.50 ≤ Dv₍₂₎50/Dv₍₁₎50 ≤ 1.25. For example, Dv₍₂₎50/Dv₍₁₎50 may be 0.50, 0.60, 0.67, 0.75, 0.83, 0.90, 1.00, 1.10, 1.25, or a value falling within a range formed by any two thereof. Optionally, 0.60 ≤ Dv₍₂₎50/Dv₍₁₎50 ≤ 0.83.

By setting Dv₍₂₎50/Dv₍₁₎50 to fall within the above range, this application improves the film-forming properties of the first polymer, and endows the first coating layer with appropriate adhesiveness and air permeability concurrently, thereby enabling the battery to achieve superior electrochemical performance and a relatively high hot-oven test pass rate.

When Dv₍₂₎50/Dv₍₁₎50 is relatively large, the adhesiveness of the first coating layer is inferior when the battery is in normal use, thereby reducing the interfacial adhesiveness of the battery, making the electrode assembly prone to deformation after charge-and-discharge cycling of the battery, and consequently affecting the electrochemical performance of the battery during normal use.

When Dv₍₂₎50/Dv₍₁₎50 is relatively small, the adhesiveness of the first coating layer is relatively high when the battery is in a heat generation stage, thereby being adverse to sufficient opening of the interface between the electrode plate and the separator, frustrating timely transmission of the gas and heat at the interface into the packaging bag, keeping the heat accumulating at the interface, and resulting in a low hot-oven test pass rate of the battery. In addition, when Dv₍₂₎50/Dv₍₁₎50 is relatively small, it is inconvenient to disperse the second polymer around the first polymer, thereby resulting in low air permeability of the separator and a relatively high risk of pore clogging of the separator during preparation of the battery (such as baking, hot pressing, or chemical formation of the electrode assembly, or other processes) and during normal use of the battery, and consequently affecting the electrochemical performance of the battery.

In some embodiments, the volume distribution particle size Dv₍₁₎90 of particles of the first polymer and the volume distribution particle size Dv₍₂₎50 of particles of the second polymer satisfy: 2.0 ≤ Dv₍₁₎90/Dv₍₂₎50 ≤ 5.0. For example, Dv₍₁₎90/Dv₍₂₎50 may be 2.0, 2.25, 2.50, 2.80, 3.00, 3.25, 3.50, 3.75, 4.0, 4.17, 5.0, or a value falling within a range formed by any two thereof. Optionally, 3.00 ≤ Dv₍₁₎90/Dv₍₂₎50 ≤ 4.17.

By setting Dv₍₁₎90/Dv₍₂₎50 to fall within the above range, this application improves the film-forming properties of the first polymer, and endows the first coating layer with appropriate adhesiveness and air permeability concurrently, thereby enabling the battery to achieve superior electrochemical performance and a relatively high hot-oven test pass rate.

When Dv₍₁₎90/Dv₍₂₎50 is relatively large, the adhesiveness of the first coating layer is inferior when the battery is in normal use, thereby reducing the interfacial adhesiveness of the battery, making the electrode assembly prone to deformation after charge-and-discharge cycling of the battery, and consequently affecting the electrochemical performance of the battery during normal use.

When Dv₍₁₎90/Dv₍₂₎50 is relatively small, the adhesiveness of the first coating layer is relatively high when the battery is in a heat generation stage, thereby being adverse to sufficient opening of the interface between the electrode plate and the separator, frustrating timely transmission of the gas and heat at the interface into the packaging bag, keeping the heat accumulating at the interface, and resulting in a low hot-oven test pass rate of the battery. In addition, when Dv₍₁₎90/Dv₍₂₎50 is relatively small, it is inconvenient to disperse the second polymer around the first polymer, thereby resulting in low air permeability of the separator and a relatively high risk of pore clogging of the separator during preparation of the battery (such as baking, hot pressing, or chemical formation of the electrode assembly, or other processes) and during normal use of the battery, and consequently affecting the electrochemical performance of the battery.

In some embodiments, the volume distribution particle size Dv₍₁₎50 of particles of the first polymer and the volume distribution particle size Dv₍₂₎50 of particles of the second polymer satisfy: 0.50 ≤ Dv₍₂₎50/Dv₍₁₎50 ≤ 1.25, and the volume distribution particle size Dv₍₁₎90 of the particles of the first polymer and the volume distribution particle size Dv₍₂₎50 of the particles of the second polymer satisfy: 2.0 ≤ Dv₍₁₎90/Dv₍₂₎50 ≤ 6.0. Optionally, 0.60 ≤ Dv₍₂₎50/Dv₍₁₎50 ≤ 0.83 and 3.00 ≤ Dv₍₁₎90/Dv₍₂₎50 ≤ 4.17.

By setting Dv₍₂₎50/Dv₍₁₎50 and Dv₍₁₎90/Dv₍₂₎50 to fall within the above range, this application makes it convenient to disperse the second polymer around the first polymer, improves the film formation of the first polymer, and favorably endows the first coating layer with appropriate adhesiveness and air permeability concurrently, thereby enabling the battery to achieve superior electrochemical performance and a relatively high hot-oven test pass rate.

In some embodiments, the volume distribution particle size Dv₍₁₎50 of the particles of the first polymer may be 0.8 µm to 2.0 µm, and optionally 1.0 µm to 2.0 µm, or 1.0 µm to 1.5 µm.

In some embodiments, the volume distribution particle size Dv₍₁₎90 of the particles of the first polymer may be 2.0 µm to 5.0 µm.

By setting the volume distribution particle sizes Dv₍₁₎50 and/or Dv₍₁₎90 of the particles of the first polymer to fall within the above ranges, this application endows the first coating layer with appropriate adhesiveness and air permeability concurrently, thereby enabling the battery to achieve superior electrochemical performance and a relatively high hot-oven test pass rate.

When the volume distribution particle size Dv₍₁₎50 and/or Dv₍₁₎90 of the particles of the first polymer is relatively large, the adhesiveness of the first coating layer is inferior when the battery is in normal use, thereby reducing the interfacial adhesiveness of the battery, making the electrode assembly prone to deformation after charge-and-discharge cycling of the battery, and consequently affecting the electrochemical performance of the battery during normal use.

When the volume distribution particle size Dv₍₁₎50 and/or Dv₍₁₎90 of the particles of the first polymer is relatively small, the adhesiveness of the first coating layer is relatively high when the battery is in a heat generation stage, thereby being adverse to sufficient opening of the interface between the electrode plate and the separator, frustrating timely transmission of the gas and heat at the interface into the packaging bag, keeping the heat accumulating at the interface, and resulting in a low hot-oven test pass rate of the battery. In addition, when the volume distribution particle size Dv₍₁₎50 and/or Dv₍₁₎90 of the particles of the first polymer is relatively small, the air permeability of the separator is inferior, and the risk of pore clogging of the separator is relatively high during preparation of the battery (such as baking, hot pressing, or chemical formation of the electrode assembly, or other processes) and during normal use of the battery, thereby affecting the electrochemical performance of the battery.

In some embodiments, the volume distribution particle size Dv₍₂₎50 of the particles of the second polymer may be 0.54 µm to 1.5 µm.

By setting the volume distribution particle size Dv₍₂₎50 of the particles of the second polymer to fall within the above range, this application endows the first coating layer with appropriate adhesiveness and air permeability concurrently, thereby enabling the battery to achieve superior electrochemical performance and a relatively high hot-oven test pass rate.

When the volume distribution particle size Dv₍₂₎50 of the particles of the second polymer is relatively large, the adhesiveness of the first coating layer is inferior when the battery is in normal use, thereby reducing the interfacial adhesiveness of the battery, making the electrode assembly prone to deformation after charge-and-discharge cycling of the battery, and consequently affecting the electrochemical performance of the battery during normal use.

When the volume distribution particle size Dv₍₂₎50 of the particles of the second polymer is relatively small, the adhesiveness of the first coating layer is relatively high when the battery is in a heat generation stage, thereby being adverse to sufficient opening of the interface between the electrode plate and the separator, frustrating timely transmission of the gas and heat at the interface into the packaging bag, keeping the heat accumulating at the interface, and resulting in a low hot-oven test pass rate of the battery. In addition, when the volume distribution particle size Dv₍₂₎50 of the particles of the second polymer is relatively small, the air permeability of the separator is inferior, and the risk of pore clogging of the separator is relatively high during preparation of the battery (such as baking, hot pressing, or chemical formation of the electrode assembly, or other processes) and during normal use of the battery, thereby affecting the electrochemical performance of the battery.

In some embodiments, the volume distribution particle size Dv₍₁₎10 of the particles of the first polymer may be 0.1 µm to 0.7 µm.

By further setting the volume distribution particle size Dv₍₁₎10 of the particles of the first polymer to fall within the above range, this application can further improve the electrolyte transport capacity of the separator, and improve the cycle performance of the battery.

In some embodiments, the volume distribution particle size Dv₍₂₎10 of the particles of the second polymer may be 0.1 µm to 0.5 µm.

In some embodiments, the volume distribution particle size Dv₍₂₎90 of the particles of the second polymer may be 2.0 µm to 5.0 µm.

By further setting the volume distribution particle size Dv₍₂₎10 and/or Dv₍₂₎90 of the particles of the second polymer to fall within the above range, this application can further improve the electrolyte transport capacity of the separator, and improve the cycle performance of the battery.

Dv10 is a particle diameter of the material corresponding to a cumulative volume percentage 10% in a volume-based particle size distribution curve as viewed from a small-diameter side; Dv₅₀ is a particle diameter of the material corresponding to a cumulative volume percentage 50% in a volume-based particle size distribution curve as viewed from a small-diameter side; and Dv₉₀ is a particle diameter of the material corresponding to a cumulative volume percentage 90% in a volume-based particle size distribution curve as viewed from a small-diameter side.

In some embodiments, the mass percent of the first polymer is denoted as m1, and the mass percent of the second polymer is denoted as m2. Based on the total mass of the first coating layer, m1 may be 50% to 86%, and m2 may be 9% to 45%. Optionally, m1 may be 70% to 82% and m2 may be 13% to 25%.

By setting the mass percent m1 of the first polymer and the mass percent m2 of the second polymer to fall within the above ranges, this application achieves appropriate adhesion between the separator and the electrode plate, and makes it convenient to fully open the interface between the electrode plate and the separator when the battery is in a heat generation stage, thereby enabling timely transmission of the gas and heat at the interface into the packaging bag, reducing heat accumulation at the interface, and consequently widening the hot-oven window of the battery and improving the hot-oven test pass rate of the battery. This also endows the first coating layer with appropriate adhesiveness and air permeability concurrently, and enables the battery to achieve superior electrochemical performance.

When the mass percent m1 of the first polymer is relatively small and the mass percent m2 of the second polymer is relatively large, the adhesiveness of the first coating layer is inferior when the battery is in normal use, thereby reducing the interfacial adhesiveness of the battery, making the electrode assembly prone to deformation after charge-and-discharge cycling of the battery, and consequently affecting the electrochemical performance of the battery during normal use.

When the mass percent m1 of the first polymer is relatively large and the mass percent m2 of the second polymer is relatively small, the adhesiveness of the first coating layer is relatively high when the battery is in a heat generation stage, thereby being adverse to sufficient opening of the interface between the electrode plate and the separator when the battery is in the heat generation stage, frustrating timely transmission of the gas and heat at the interface into the packaging bag, keeping the heat accumulating at the interface, and resulting in a low hot-oven test pass rate of the battery. In addition, when the mass percent m1 of the first polymer is relatively large and the mass percent m2 of the second polymer is relatively small, it is inconvenient to disperse the second polymer around the first polymer, thereby resulting in low air permeability of the separator and a relatively high risk of pore clogging of the separator during preparation of the battery (such as baking, hot pressing, or chemical formation of the electrode assembly, or other processes) and during normal use of the battery, and consequently affecting the electrochemical performance of the battery.

In some embodiments, the weight-average molecular weight of the first polymer is denoted as M_{w1}. M_{w1} may fall within a range of 50,000 to 500,000, for example, may be 50,000, 100,000, 150,000, 180,000, 200,000, 230,000, 260,000, 300,000, 350,000, 400,000, 450,000, 500,000, or a value falling within a range formed by any two thereof. Optionally, M_{w1} may be 150,000 to 260,000.

By setting the weight-average molecular weight M_{w1} of the first polymer to fall within the above range, this application endows the first coating layer with appropriate adhesiveness, and endows the battery with appropriate interfacial adhesiveness. This makes it convenient to fully open the interface between the electrode plate and the separator when the battery is in a heat generation stage, thereby enabling timely transmission of the gas and heat at the interface into the packaging bag, reducing heat accumulation at the interface, and consequently widening the hot-oven window of the battery and improving the hot-oven test pass rate of the battery. This also reduces the probability of deformation of the electrode assembly after charge-and-discharge cycling of the battery, thereby also enabling the battery to achieve superior electrochemical performance.

When the weight-average molecular weight M_{w1} of the first polymer is relatively low, the fluidity of the first polymer is relatively high after the first polymer is softened by heat during preparation of the battery (such as baking, hot pressing, or chemical formation of the electrode assembly, or other processes) and during normal use of the battery, thereby leading to a relatively high risk of pore clogging of the separator, and consequently affecting the electrochemical performance of the battery during normal use.

When the weight-average molecular weight M_{w1} of the first polymer is relatively high, the adhesiveness of the first coating layer is inferior when the battery is in normal use, thereby reducing the interfacial adhesiveness of the battery, making the electrode assembly prone to deformation after charge-and-discharge cycling of the battery, and consequently affecting the electrochemical performance of the battery during normal use.

In some embodiments, the weight-average molecular weight of the second polymer is denoted as M_{w2}. M_{w2} may fall within a range of 700,000 to 2,200,000, for example, may be 700,000, 800,000, 900,000, 1,000,000, 1,180,000, 1,340,000, 1,500,000, 1,810,000, 2,000,000, 2,200,000, or a value falling within a range formed by any two thereof. Optionally, M_{w2} may be 1,180,000 to 2,000,000.

By setting the weight-average molecular weight M_{w2} of the second polymer to fall within the above range, the second polymer can be dispersed around the first polymer, thereby reducing the risk of pore clogging of the separator during preparation of the battery (such as baking, hot pressing, or chemical formation of the electrode assembly, or other processes) and during normal use of the battery, and consequently enabling the battery to achieve superior electrochemical performance. By setting the weight-average molecular weight M_{w2} of the second polymer to fall within the above range, appropriate adhesion is achieved between the separator and the electrode plate, thereby making it convenient for the interface between the electrode plate and the separator to be fully opened when the battery is in a heat generation stage, enabling timely transmission of the gas and heat at the interface into the packaging bag, reducing heat accumulation at the interface, and consequently widening the hot-oven window of the battery and improving the hot-oven test pass rate of the battery.

When the weight-average molecular weight M_{w2} of the second polymer is relatively low, the second polymer is softened by heat when the battery is in a heat generation stage, thereby increasing the adhesion force between the first coating layer of the separator and the electrode plate, and consequently being adverse to sufficient opening of the interface between the electrode plate and the separator, frustrating timely transmission of the gas and heat at the interface into the packaging bag, keeping the heat accumulating at the interface, and resulting in a low hot-oven test pass rate of the battery. In addition, when the weight-average molecular weight M_{w2} of the second polymer is relatively low, the fluidity of the second polymer is relatively high after being softened by heat during preparation of the battery (such as baking, hot pressing, or chemical formation of the electrode assembly, or other processes) and during normal use of the battery, thereby resulting in a relatively high risk of pore clogging of the separator during hot pressing and chemical formation, and consequently affecting the electrochemical performance of the battery.

When the weight-average molecular weight M_{w2} of the second polymer is relatively high, the film-forming properties of the second polymer are inferior, and the adhesiveness of the first coating layer is inferior when the battery is in normal use, thereby reducing the interfacial adhesiveness of the battery, making the electrode assembly prone to deformation after charge-and-discharge cycling of the battery, and consequently affecting the electrochemical performance of the battery during normal use.

In some embodiments, M_{w1} may be 150,000 to 260,000, and M_{w2} may be 1,180,000 to 2,000,000.

By setting M_{w1} and M_{w2} to fall within the above ranges, this application improves the electrochemical performance of the battery, further widens the hot-oven window of the battery, and further improves the hot-oven test pass rate of the battery.

In some embodiments, 700,000 ≤ M_{w2} - M_{w1} ≤ 2,300,000, and optionally 980,000 ≤ M_{w2} - M_{w1} ≤ 1,610,000.

By setting M_{w2}-M_{w1} to fall within the above range, this application makes it convenient to disperse the second polymer around the first polymer, thereby reducing the risk of pore clogging in the separator during preparation of the battery (such as baking, hot pressing, or chemical formation of the electrode assembly, or other processes) and during normal use of the battery. This setting also endows the first coating layer with appropriate adhesiveness and air permeability concurrently, thereby enabling the battery to achieve superior electrochemical performance and a relatively high hot-oven test pass rate.

In some embodiments, the weight-average molecular weight of the first polymer is denoted as M_{w1}, the weight-average molecular weight of the second polymer is denoted as M_{w2}, M_{w1} may be 50,000 to 500,000, and M_{w2} may be 700,000 to 2,200,000, and 700,000 ≤ M_{w2} - M_{w1} ≤ 2,300,000. In some embodiments, M_{w1} may be 150,000 to 260,000, M_{w2} may be 1,180,000 to 2,000,000, and 980,000 ≤ M_{w2} - M_{w1} ≤ 1,160,000.

This improves the electrochemical performance of the battery, further widens the hot-oven window of the battery, and further improves the hot-oven test pass rate of the battery.

In some embodiments, the first polymer may include at least one of a homopolymer or a copolymer of at least one monomer selected from ethylene, propylene, vinylidene fluoride, acrylic acid, acrylic ester, styrene, acrylonitrile, maleic anhydride, vinyl chloride, or allyl chloride. The first polymer may include a homopolymer, a copolymer, or a blend thereof.

In some embodiments, the second polymer may include at least one of a homopolymer or a copolymer of at least one monomer selected from vinylidene fluoride, hexafluoropropylene, propylene, vinyl chloride, styrene, butadiene, acrylate ester, or acrylic acid. The second polymer may include a homopolymer, a copolymer, or a blend thereof.

In some embodiments, the coating weight of the first coating layer may fall within a range of 0.5 mg/5000 mm² to 3 mg/5000 mm², for example, may be 0.5 mg/5000 mm², 0.8 mg/5000 mm², 1 mg/5000 mm², 1.5 mg/5000 mm², 2 mg/5000 mm², 2.5 mg/5000 mm², 3 mg/5000 mm², or a value falling within a range formed by any two thereof. Optionally, the coating weight of the first coating layer may be 0.5 mg/5000 mm² to 1.5 mg/5000 mm².

By setting the coating weight of the first coating layer to fall within the above range, this application endows the first coating layer with appropriate adhesiveness, that is, makes the first coating layer highly adhesive when the battery is in normal use while making the first coating layer less adhesive when the battery is in a heat generation stage. This makes it convenient to fully open the interface between the electrode plate and the separator when the battery is in a heat generation stage, thereby enabling timely transmission of the gas and heat at the interface into the packaging bag, reducing heat accumulation at the interface, and consequently widening the hot-oven window of the battery and improving the hot-oven test pass rate of the battery. This also reduces the probability of deformation of the electrode assembly after charge-and-discharge cycling of the battery, thereby also enabling the battery to achieve superior electrochemical performance.

When the coating weight of the first coating layer is relatively low, the adhesiveness of the first coating layer is inferior when the battery is in normal use, thereby reducing the interfacial adhesiveness of the battery, making the electrode assembly prone to deformation after charge-and-discharge cycling of the battery, and consequently affecting the electrochemical performance of the battery during normal use.

When the coating weight of the first coating layer is relatively high, the adhesiveness of the first coating layer is relatively high when the battery is in a heat generation stage, thereby being adverse to sufficient opening of the interface between the electrode plate and the separator, frustrating timely transmission of the gas and heat at the interface into the packaging bag, keeping the heat accumulating at the interface, and resulting in a low hot-oven test pass rate of the battery.

In some embodiments, the thickness of the first coating layer may fall within a range of 0.5 µm to 2.8 µm, for example, may be 0.5 µm, 1 µm, 1.5 µm, 2 µm, 2.5 µm, 2.8 µm, or a value falling within a range formed by any two thereof. Optionally, the thickness of the first coating layer may be 1 µm to 2 µm.

By setting the thickness of the first coating layer to fall within the above range, this application endows the first coating layer with appropriate adhesiveness, that is, makes the first coating layer highly adhesive when the battery is in normal use while making the first coating layer less adhesive when the battery is in a heat generation stage. This makes it convenient to fully open the interface between the electrode plate and the separator when the battery is in a heat generation stage, thereby enabling timely transmission of the gas and heat at the interface into the packaging bag, reducing heat accumulation at the interface, and consequently widening the hot-oven window of the battery and improving the hot-oven test pass rate of the battery. This also reduces the probability of deformation of the electrode assembly after charge-and-discharge cycling of the battery, thereby enabling the battery to achieve superior electrochemical performance.

When the thickness of the first coating layer is relatively small, the adhesiveness of the first coating layer is inferior when the battery is in normal use, thereby reducing the interfacial adhesiveness of the battery, making the electrode assembly prone to deformation after charge-and-discharge cycling of the battery, and consequently affecting the electrochemical performance of the battery during normal use.

When the thickness of the first coating layer is relatively large, the adhesiveness of the first coating layer is relatively high when the battery is in a heat generation stage, thereby being adverse to sufficient opening of the interface between the electrode plate and the separator, frustrating timely transmission of the gas and heat at the interface into the packaging bag, keeping the heat accumulating at the interface, and resulting in a low hot-oven test pass rate of the battery.

In some embodiments, the first coating layer may further include a thickener, a wetting agent, and the like. The thickener is not particularly limited herein. For example, the thickener may be at least one of sodium carboxymethyl cellulose, hydroxyethyl cellulose, hydroxypropyl methyl cellulose, methyl hydroxyethyl cellulose, or ethyl hydroxyethyl cellulose. The wetting agent is not particularly limited herein. For example, the wetting agent may be at least one of polyoxyethylene ether, dimethyl siloxane, sucrose ester, or sodium alkyl ether sulfate.

In some embodiments, a first coating layer is disposed on one surface of the porous substrate, and a second coating layer is disposed on another surface of the porous substrate. The second coating layer includes a third polymer. The third polymer may include at least one of a homopolymer or a copolymer of at least one monomer selected from butyl acrylate, octyl acrylate, isooctyl acrylate, styrene, or butadiene. The third polymer may include a homopolymer, a copolymer, or a blend thereof.

This can reduce the probability of deformation of the electrode assembly after charge-and-discharge cycling of the battery, thereby endowing the battery with superior electrochemical performance.

In some embodiments, the melting point of the third polymer may be 50 °C to 70 °C.

The thickness of the second coating layer is not particularly limited herein, as long as the objectives of this application can be achieved. For example, the thickness of the second coating layer may be 0.5 µm to 3 µm.

The coating weight of the second coating layer is not particularly limited herein, as long as the objectives of this application can be achieved. For example, the coating weight of the second coating layer may be 0.5 mg/5000 mm² to 3 mg/5000 mm².

In some embodiments, an inorganic coating layer may be disposed between the porous substrate and the first coating layer. The inorganic coating layer disposed between the porous substrate and the first coating layer can also improve the thermal shrinkage resistance, puncture resistance, and/or electrolyte transport performance of the separator.

In some embodiments, the inorganic coating layer may include a ceramic. The ceramic may include, but is not limited to, at least one of aluminum oxide, boehmite, titanium dioxide, silicon dioxide, zirconium dioxide, tin dioxide, magnesium hydroxide, magnesium oxide, zinc oxide, barium sulfate, boron nitride, or aluminum nitride.

In some embodiments, the inorganic coating layer may further include a binder. The type of the binder is not particularly limited herein. For example, the binder may include at least one of polyacrylate ester, polyimide, polyamide, polyamide imide, polyvinylidene fluoride, styrene-butadiene rubber, sodium alginate, polyvinyl alcohol, polytetrafluoroethylene, polyacrylonitrile, sodium carboxymethyl cellulose, potassium carboxymethyl cellulose, sodium hydroxypropyl cellulose, or potassium hydroxypropyl cellulose.

The thickness of the inorganic coating layer is not particularly limited herein, as long as the objectives of this application can be achieved. For example, the thickness of the inorganic coating layer may be 0.5 µm to 6 µm.

The coating weight of the inorganic coating layer is not particularly limited herein, as long as the objectives of this application can be achieved. For example, the coating weight of the inorganic coating layer may be 3 mg/5000 mm² to 20 mg/5000 mm².

The substrate of the separator is not particularly limited herein, as long as the objectives of this application can be achieved. For example, the substrate of the separator may be a nonwoven fabric, a film, or a composite film, each assuming a porous structure. The material of the substrate of the separator may include at least one of polyethylene, polypropylene, polyethylene terephthalate, polyimide, polyamide, spandex, or aramid. Optionally, the substrate layer may be a polypropylene porous film, a polyethylene porous film, a polypropylene non-woven fabric, a polyethylene non-woven fabric, or a polypropylene-polyethylene-polypropylene porous composite film.

### [Positive electrode plate]

The material, composition, and manufacturing method of the positive electrode plate may include any technology well-known in the prior art.

In some embodiments, the positive electrode plate may include a positive current collector and a positive electrode film layer disposed on at least one surface of the positive current collector.

In some embodiments, the shape of the positive current collector may be plate-shaped or foil-shaped, which is not limited herein.

In some embodiments, the thickness of the positive current collector may be 6 µm to 25 µm.

In some embodiments, the material of the positive current collector is not particularly limited, and may be a material that is electronically conductive. For example, the material may be an elemental substance or an alloy (such as stainless steel) containing at least one of C, Ti, Cr, Mo, Ru, Rh, Ta, W, Os, Ir, Pt, Au, or Al.

From the viewpoint of high conductivity, high stability in an electrolyte solution, and high oxidation resistance, the material is optionally carbon layer, aluminum foil, stainless steel foil, or the like. From the viewpoint of further reducing production cost, the material is optionally aluminum foil. A person skilled in the art may adjust the material as appropriate.

The positive film layer includes a positive active material. The positive active material may be a material capable of absorbing and releasing lithium. Optionally, the positive active material may include at least one of lithium cobalt oxide (LiCoO₂), lithium nickel cobalt aluminum oxide, lithium nickel cobalt manganese oxide, lithium iron phosphate (LiFePO₄), or respective modified compounds thereof.

As an example, the lithium nickel cobalt aluminum oxide may include, but is not limited to, LiNi_{0.8}Co_{0.15}Al_{0.05}O₂.

As an example, the lithium nickel cobalt manganese oxide may include, but is not limited to, at least one of LiNi_{1/3}Co_{1/3}Mn_{1/3}O₂, LiNi_{0.5}Co_{0.2}Mn_{0.3}O₂, LiNi_{0.6}Co_{0.2}Mn_{0.2}O₂, or LiNi_{0.8}Co_{0.1}Mn_{0.1}O₂.

The modified compound of each of the above positive active materials may be formed by modification of the positive active material, where the modification is doping, surface coating, or both doping and coating.

In some embodiments, the positive electrode film layer may include a positive conductive agent. The specific type of the positive conductive agent is not particularly limited, and may be selected as required. For example, the positive conductive agent may include conductive carbon powder. As an example, the positive conductive agent may include, but is not limited to, at least one of conductive carbon black, acetylene black (AB), Ketjen black (KB), graphite, carbon fiber, carbon tubes, graphene, amorphous carbon, hard carbon, soft carbon, glassy carbon, carbon nanofiber, or carbon nanotubes (CNT). Such materials may be used individually, or two or more thereof may be used in combination.

In some embodiments, the positive electrode film layer may include a positive electrode binder. The specific type of the positive electrode binder is not particularly limited, and may be selected as required. As an example, the positive electrode binder may include, but is not limited to, at least one of polyvinylidene fluoride (PVDF), polytetrafluoroethylene (PTFE), poly(vinylidene fluoride-co-tetrafluoroethylene-co-propylene), poly(vinylidene fluoride-co-hexafluoropropylene-co-tetrafluoroethylene), poly(tetrafluoroethylene-co-hexafluoropropylene), or polyvinyl alcohol (PVA).

In some embodiments, the thickness of the positive electrode film layer may be 15 µm to 150 µm, which is not limited herein. The thickness of the positive electrode film layer means a thickness of the positive electrode film layer on a single side of the positive current collector.

The positive electrode plate may be prepared by a conventional method in this field. A general method for preparing the positive electrode plate includes: dispersing a positive active material and optionally a positive conductive agent, a positive electrode binder and the like in a solvent to form a positive electrode slurry, applying the positive electrode slurry onto a positive current collector, and performing steps such as oven-drying and compaction to obtain a positive electrode plate. The solvent in this application may be, but is not limited to, N-methyl-pyrrolidone (NMP).

The slurry may be applied in a coating manner known in the art, such as extrusion coating, gravure coating, micro-gravure coating, electrospraying, or transfer coating, which is not limited herein.

### [Negative electrode plate]

The material, composition, and manufacturing method of the negative electrode plate may include any technology well-known in the prior art.

In some embodiments, the negative electrode plate may include a negative current collector and a negative electrode film layer disposed on at least one surface of the negative current collector.

In some embodiments, the shape of the negative current collector may be plate-shaped or foil-shaped, which is not limited herein.

In some embodiments, the thickness of the negative current collector may be 4 µm to 25 µm.

In some embodiments, the material of the negative current collector is not particularly limited, and may be a material of high electronic conductivity. For example, the material may be an elemental substance or alloy (such as stainless steel) containing at least one of C, Cu, Ni, Fe, V, Nb, Ti, Cr, Mo, Ru, Rh, Ta, W, Os, Ir, Pt, Au, or Ag, or may be a composite material formed by plating a conductive material with a different conductive material, for example, by plating Fe with Cu.

From the viewpoint of high conductivity, high stability in an electrolyte solution, and high oxidation resistance, the material is optionally copper foil, nickel foil, stainless steel foil, or the like. From the viewpoint of further reducing production cost, the material is optionally copper foil or nickel foil. A person skilled in the art may adjust the material as appropriate.

The negative film layer includes a negative active material. The negative active material may include at least one of graphite or a silicon-based material.

The mass percent of the silicon-based material in the negative active material may be 0% to 25%. The mass percent 0% of the silicon-based material means that the negative active material contains no silicon-based material.

As an example, the graphite includes natural graphite, artificial graphite, or a mixture thereof.

As an example, the silicon-based material includes at least one of silicon, an oxide of silicon, a silicon-carbon material, or a silicon alloy.

In some embodiments, the negative electrode film layer may include a negative conductive agent. The specific type of the negative conductive agent is not particularly limited, and may be selected as required. For example, the negative conductive agent may include conductive carbon powder. As an example, the negative conductive agent may include, but is not limited to, at least one of conductive carbon black, acetylene black (AB), Ketjen black (KB), graphite, carbon fiber, carbon tubes, graphene, amorphous carbon, hard carbon, soft carbon, glassy carbon, carbon nanofiber, or carbon nanotubes (CNT). Such materials may be used individually, or two or more thereof may be used in combination.

In some embodiments, the negative electrode film layer may include a negative electrode binder. The specific type of the negative electrode binder is not particularly limited, and may be selected as required. As an example, the negative electrode binder may include at least one of styrene-butadiene rubber (SBR), acrylonitrile multicomponent copolymer (for example, LA-type aqueous binder, optionally LA132 or LA133), polyacrylic acid (PAA) or a salt of PAA, styrene-acrylic resin, polyvinyl alcohol (PVA), or respective derivatives thereof. The derivative typically means a product derived by substituting a hydrogen atom or atomic group in a polymer with another atom or atomic group.

In some embodiments, the negative electrode film layer may further include a negative electrode dispersant to improve the film formation quality of the negative electrode film layer. For example, the negative electrode dispersant may include at least one of sodium carboxymethyl cellulose (CMC) or a derivative thereof. The derivative typically means a product derived by substituting a hydrogen atom or atomic group in a polymer with another atom or atomic group (such as amino group).

In some embodiments, the thickness of the negative electrode film layer may be 30 µm to 150 µm, which is not limited herein. The thickness of the negative electrode film layer means a thickness of the negative electrode film layer on a single side of the negative current collector.

The negative electrode plate may be prepared by a conventional method in this field. A general method for preparing the negative electrode plate includes: dispersing a negative active material, a metal salt, and optionally a negative conductive agent, a negative electrode binder, a negative electrode dispersant, and the like in a solvent to form a negative electrode slurry, applying the negative electrode slurry onto a negative current collector, and performing steps such as oven-drying and compaction to obtain a negative electrode plate. The solvent may include at least one of water, ethanol, acetone, butanone, dimethylformamide, N-methylpyrrolidone, diethylformamide, dimethyl sulfoxide, or tetrahydrofuran, but the components of the solvent are not limited herein.

The slurry may be applied in a coating manner known in the art, such as extrusion coating, gravure coating, micro-gravure coating, electrospraying, or transfer coating, which is not limited herein.

The negative electrode plate provided herein does not exclude other additional functional layers different from the negative electrode film layer. For example, in some embodiments, the negative electrode plate may further include a conductive primer coating layer (for example, formed of a conductive agent and a binder) disposed on a surface of the negative current collector and sandwiched between the negative current collector and the negative electrode film layer. In some embodiments, the negative electrode plate may further include a protection layer that overlays the surface of the negative electrode film layer.

### [Electrolyte]

The battery further includes an electrolyte. The electrolyte may be a solid electrolyte, a gel electrolyte, or a liquid electrolyte (also known as an electrolyte solution).

In some embodiments, the electrolyte may be an electrolyte solution. The electrolyte solution may include an electrolyte salt and a solvent. The electrolyte salt contains lithium ions.

The types of the electrolyte salt and the solvent are not particularly limited, and may be selected as required.

In some embodiments, as an example, the electrolyte salt may include, but is not limited to, at least one of lithium hexafluorophosphate (LiPF₆), lithium perchlorate (LiClO₄), lithium tetrafluoroborate (LiBF₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), or lithium bis(oxalato)borate (LiBOB). The above electrolyte salts may be used individually, or two or more thereof may be used in combination.

In some embodiments, the solvent may include at least one of a carbonate ester compound, a carboxylate ester compound, an ether compound, or a sulfone compound. As an example, the solvent may include, but is not limited to, at least one of ethylene carbonate (EC), fluoroethylene carbonate (FEC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), γ-butyrolactone, sulfolane (SF), dimethyl sulfone (MSM), ethyl methyl sulfone (EMS), diethyl sulfone (ESE), methyl sulfolane, dimethyl sulfoxide, 2-methyltetrahydrofuran, 1,3-dioxolane, 4-methyl-1,3-dioxolane, 1,2-dimethoxyethane, 1,2-diethoxyethane, dimethyl ether, diethyl ether, nitromethane, or N,N-dimethylformamide. The above solvents may be used individually, or two or more thereof may be used in combination.

In some embodiments, the electrolyte solution may further contain an additive, such as an additive for improving various performance indicators of a battery.

The electrolyte solution may be prepared by using a conventional method in this field. An exemplary method includes: mixing well a solvent, an electrolyte salt, and optionally another component to obtain an electrolyte solution. The order of adding the materials is not particularly limited. For example, an electrolyte salt and optionally another component may be added into a solvent, and mixed well to obtain an electrolyte solution.

The constituents of the electrolyte solution and contents thereof may be determined by using a conventional method in the art. For example, the constituents and the contents thereof may be detected by using a gas chromatography mass spectrometry (GC-MS) instrument, ion chromatography (IC), liquid chromatography (LC), or the like.

In some embodiments, the positive electrode plate, the negative electrode plate, and the separator may be made into an electrode assembly by winding or stacking.

In some embodiments, the battery may be a pouch battery.

In some embodiments, the outer package may be a soft package such as a pouch-type soft package. The soft package may be made of an aluminum laminated film or plastic. As an example, the plastic may include at least one of polypropylene (PP), polybutylene terephthalate (PBT), or polybutylene succinate (PBS).

### Separator

An embodiment of this application further provides a separator.

The separator includes a porous substrate. A first coating layer is disposed on at least one surface of the porous substrate. The first coating layer includes a first polymer and a second polymer that melt at different melting points.

In some embodiments, a melting point of the first polymer is denoted as Tₘ₁, a melting point of the second polymer is denoted as Tₘ₂, Tₘ₁ may be 60 °C to 100 °C, Tₘ₂ may be greater than or equal to 130 °C, and Tₘ₂-Tₘ₁ may be 40 °C to 120 °C.

By setting the melting point Tₘ₁ of the first polymer, the melting point Tₘ₂ of the second polymer, and Tₘ₂-Tₘ₁ to fall within the above ranges, this application endows the battery with superior electrochemical performance, widens the hot-oven window of the battery, and improves the hot-oven test pass rate of the battery.

In some embodiments, the melting point of the first polymer is denoted as Tₘ₁, the melting point of the second polymer is denoted as Tₘ₂, Tₘ₁ may be 70 °C to 90 °C, Tₘ₂ may be 135 °C to 160 °C, and Tₘ₂-Tₘ₁ may be 50 °C to 80 °C.

This improves the electrochemical performance of the battery, further widens the hot-oven window of the battery, and further improves the hot-oven test pass rate of the battery.

In some embodiments, the volume distribution particle size Dv₍₁₎50 of particles of the first polymer and the volume distribution particle size Dv₍₂₎50 of particles of the second polymer satisfy: 0.50 ≤ Dv₍₂₎50/Dv₍₁₎50 ≤ 1.25. For example, Dv₍₂₎50/Dv₍₁₎50 may be 0.50, 0.60, 0.67, 0.75, 0.83, 0.90, 1.00, 1.10, 1.25, or a value falling within a range formed by any two thereof. Optionally, 0.60 ≤ Dv₍₂₎50/Dv₍₁₎50 ≤ 0.83.

By setting Dv₍₂₎50/Dv₍₁₎50 to fall within the above range, this application improves the film-forming properties of the first polymer, and endows the first coating layer with appropriate adhesiveness and air permeability concurrently, thereby enabling the battery to achieve superior electrochemical performance and a relatively high hot-oven test pass rate.

In some embodiments, the volume distribution particle size Dv₍₁₎90 of particles of the first polymer and the volume distribution particle size Dv₍₂₎50 of particles of the second polymer satisfy: 2.0 ≤ Dv₍₁₎90/Dv₍₂₎50 ≤ 5.0. For example, Dv₍₁₎90/Dv₍₂₎50 may be 2.0, 2.25, 2.50, 2.80, 3.00, 3.25, 3.50, 3.75, 4.0, 4.17, 5.0, or a value falling within a range formed by any two thereof. Optionally, 3.00 ≤ Dv₍₁₎90/Dv₍₂₎50 ≤ 4.17.

By setting Dv₍₁₎90/Dv₍₂₎50 to fall within the above range, this application improves the film-forming properties of the first polymer, and endows the first coating layer with appropriate adhesiveness and air permeability concurrently, thereby enabling the battery to achieve superior electrochemical performance and a relatively high hot-oven test pass rate.

In some embodiments, the volume distribution particle size Dv₍₁₎50 of particles of the first polymer and the volume distribution particle size Dv₍₂₎50 of particles of the second polymer satisfy: 0.50 ≤ Dv₍₂₎50/Dv₍₁₎50 ≤ 1.25, and the volume distribution particle size Dv₍₁₎90 of the particles of the first polymer and the volume distribution particle size Dv₍₂₎50 of the particles of the second polymer satisfy: 2.0 ≤ Dv₍₁₎90/Dv₍₂₎50 ≤ 6.0. Optionally, 0.60 ≤ Dv₍₂₎50/Dv₍₁₎50 ≤ 0.83 and 3.00 ≤ Dv₍₁₎90/Dv₍₂₎50 ≤ 4.17.

By setting Dv₍₂₎50/Dv₍₁₎50 and Dv₍₁₎90/Dv₍₂₎50 to fall within the above range, this application makes it convenient to disperse the second polymer around the first polymer, improves the film formation of the first polymer, and favorably endows the first coating layer with appropriate adhesiveness and air permeability concurrently, thereby enabling the battery to achieve superior electrochemical performance and a relatively high hot-oven test pass rate.

In some embodiments, the volume distribution particle size Dv₍₁₎50 of the particles of the first polymer may be 0.8 µm to 2.0 µm, and optionally 1.0 µm to 2.0 µm, or 1.0 µm to 1.5 µm.

In some embodiments, the volume distribution particle size Dv₍₁₎90 of the particles of the first polymer may be 2.0 µm to 5.0 µm.

By setting the volume distribution particle sizes Dv₍₁₎50 and/or Dv₍₁₎90 of the particles of the first polymer to fall within the above ranges, this application endows the first coating layer with appropriate adhesiveness and air permeability concurrently, thereby enabling the battery to achieve superior electrochemical performance and a relatively high hot-oven test pass rate.

In some embodiments, the volume distribution particle size Dv₍₂₎50 of the particles of the second polymer may be 0.54 µm to 1.5 µm.

By setting the volume distribution particle size Dv₍₂₎50 of the particles of the second polymer to fall within the above range, this application endows the first coating layer with appropriate adhesiveness and air permeability concurrently, thereby enabling the battery to achieve superior electrochemical performance and a relatively high hot-oven test pass rate.

In some embodiments, the volume distribution particle size Dv₍₁₎10 of the particles of the first polymer may be 0.1 µm to 0.7 µm.

By further setting the volume distribution particle size Dv₍₁₎10 of the particles of the first polymer to fall within the above range, this application can further improve the electrolyte transport capacity of the separator, and improve the cycle performance of the battery.

In some embodiments, the volume distribution particle size Dv₍₂₎10 of the particles of the second polymer may be 0.1 µm to 0.5 µm.

In some embodiments, the volume distribution particle size Dv₍₂₎90 of the particles of the second polymer may be 2.0 µm to 5.0 µm.

By further setting the volume distribution particle size Dv₍₂₎10 and/or Dv₍₂₎90 of the particles of the second polymer to fall within the above range, this application can further improve the electrolyte transport capacity of the separator, and improve the cycle performance of the battery.

In some embodiments, the mass percent of the first polymer is denoted as m1, and the mass percent of the second polymer is denoted as m2. Based on the total mass of the first coating layer, m1 may be 50% to 86%, and m2 may be 9% to 45%. Optionally, m1 may be 70% to 82% and m2 may be 13% to 25%.

By setting the mass percent m1 of the first polymer and the mass percent m2 of the second polymer to fall within the above ranges, this application achieves appropriate adhesion between the separator and the electrode plate, and makes it convenient to fully open the interface between the electrode plate and the separator when the battery is in a heat generation stage, thereby enabling timely transmission of the gas and heat at the interface into the packaging bag, reducing heat accumulation at the interface, and consequently widening the hot-oven window of the battery and improving the hot-oven test pass rate of the battery. This also endows the first coating layer with appropriate adhesiveness and air permeability concurrently, and enables the battery to achieve superior electrochemical performance.

In some embodiments, the weight-average molecular weight of the first polymer is denoted as M_{w1}. M_{w1} may fall within a range of 50,000 to 500,000, for example, may be 50,000, 100,000, 150,000, 180,000, 200,000, 230,000, 260,000, 300,000, 350,000, 400,000, 450,000, 500,000, or a value falling within a range formed by any two thereof. Optionally, M_{w1} may be 150,000 to 260,000.

By setting the weight-average molecular weight M_{w1} of the first polymer to fall within the above range, this application endows the first coating layer with appropriate adhesiveness, and endows the battery with appropriate interfacial adhesiveness. This makes it convenient to fully open the interface between the electrode plate and the separator when the battery is in a heat generation stage, thereby enabling timely transmission of the gas and heat at the interface into the packaging bag, reducing heat accumulation at the interface, and consequently widening the hot-oven window of the battery and improving the hot-oven test pass rate of the battery. This also reduces the probability of deformation of the electrode assembly after charge-and-discharge cycling of the battery, thereby also enabling the battery to achieve superior electrochemical performance.

In some embodiments, the weight-average molecular weight of the second polymer is denoted as M_{w2}. M_{w2} may fall within a range of 700,000 to 2,200,000, for example, may be 700,000, 800,000, 900,000, 1,000,000, 1,180,000, 1,340,000, 1,500,000, 1,810,000, 2,000,000, 2,200,000, or a value falling within a range formed by any two thereof. Optionally, M_{w2} may be 1,180,000 to 2,000,000.

By setting the weight-average molecular weight M_{w2} of the second polymer to fall within the above range, the second polymer can be dispersed around the first polymer, thereby reducing the risk of pore clogging of the separator during preparation of the battery (such as baking, hot pressing, or chemical formation of the electrode assembly, or other processes) and during normal use of the battery, and consequently enabling the battery to achieve superior electrochemical performance. By setting the weight-average molecular weight M_{w2} of the second polymer to fall within the above range, appropriate adhesion is achieved between the separator and the electrode plate, thereby making it convenient for the interface between the electrode plate and the separator to be fully opened when the battery is in a heat generation stage, enabling timely transmission of the gas and heat at the interface into the packaging bag, reducing heat accumulation at the interface, and consequently widening the hot-oven window of the battery and improving the hot-oven test pass rate of the battery.

In some embodiments, M_{w1} may be 150,000 to 260,000, and M_{w2} may be 1,180,000 to 2,000,000.

By setting M_{w1} and M_{w2} to fall within the above ranges, this application improves the electrochemical performance of the battery, further widens the hot-oven window of the battery, and further improves the hot-oven test pass rate of the battery.

In some embodiments, 700,000 ≤ M_{w2} - M_{w1} ≤ 2,300,000, and optionally 980,000 ≤ M_{w2} - M_{w1} ≤ 1,610,000.

By setting M_{w2}-M_{w1} to fall within the above range, this application makes it convenient to disperse the second polymer around the first polymer, thereby reducing the risk of pore clogging in the separator during preparation of the battery (such as baking, hot pressing, or chemical formation of the electrode assembly, or other processes) and during normal use of the battery. This setting also endows the first coating layer with appropriate adhesiveness and air permeability concurrently, thereby enabling the battery to achieve superior electrochemical performance and a relatively high hot-oven test pass rate.

In some embodiments, the weight-average molecular weight of the first polymer is denoted as M_{w1}, the weight-average molecular weight of the second polymer is denoted as M_{w2}, M_{w1} may be 50,000 to 500,000, and M_{w2} may be 700,000 to 2,200,000, and 700,000 ≤ M_{w2} - M_{w1} ≤ 2,300,000. In some embodiments, M_{w1} may be 150,000 to 260,000, M_{w2} may be 1,180,000 to 2,000,000, and 980,000 ≤ M_{w2} - M_{w1} ≤ 1,160,000.

This improves the electrochemical performance of the battery, further widens the hot-oven window of the battery, and further improves the hot-oven test pass rate of the battery.

In some embodiments, the first polymer may include at least one of a homopolymer or a copolymer of at least one monomer selected from ethylene, propylene, vinylidene fluoride, acrylic acid, acrylic ester, styrene, acrylonitrile, maleic anhydride, vinyl chloride, or allyl chloride. The first polymer may include a homopolymer, a copolymer, or a blend thereof.

In some embodiments, the second polymer may include at least one of a homopolymer or a copolymer of at least one monomer selected from vinylidene fluoride, hexafluoropropylene, propylene, vinyl chloride, styrene, butadiene, acrylate ester, or acrylic acid. The second polymer may include a homopolymer, a copolymer, or a blend thereof.

In some embodiments, the coating weight of the first coating layer may fall within a range of 0.5 mg/5000 mm² to 3 mg/5000 mm², for example, may be 0.5 mg/5000 mm², 0.8 mg/5000 mm², 1 mg/5000 mm², 1.5 mg/5000 mm², 2 mg/5000 mm², 2.5 mg/5000 mm², 3 mg/5000 mm², or a value falling within a range formed by any two thereof. Optionally, the coating weight of the first coating layer may be 0.5 mg/5000 mm² to 1.5 mg/5000 mm².

By setting the coating weight of the first coating layer to fall within the above range, this application endows the first coating layer with appropriate adhesiveness, that is, makes the first coating layer highly adhesive when the battery is in normal use while making the first coating layer less adhesive when the battery is in a heat generation stage. This makes it convenient to fully open the interface between the electrode plate and the separator when the battery is in a heat generation stage, thereby enabling timely transmission of the gas and heat at the interface into the packaging bag, reducing heat accumulation at the interface, and consequently widening the hot-oven window of the battery and improving the hot-oven test pass rate of the battery. This also reduces the probability of deformation of the electrode assembly after charge-and-discharge cycling of the battery, thereby also enabling the battery to achieve superior electrochemical performance.

In some embodiments, the thickness of the first coating layer may fall within a range of 0.5 µm to 2.8 µm, for example, may be 0.5 µm, 1 µm, 1.5 µm, 2 µm, 2.5 µm, 2.8 µm, or a value falling within a range formed by any two thereof. Optionally, the thickness of the first coating layer may be 1 µm to 2 µm.

By setting the thickness of the first coating layer to fall within the above range, this application endows the first coating layer with appropriate adhesiveness, that is, makes the first coating layer highly adhesive when the battery is in normal use while making the first coating layer less adhesive when the battery is in a heat generation stage. This makes it convenient to fully open the interface between the electrode plate and the separator when the battery is in a heat generation stage, thereby enabling timely transmission of the gas and heat at the interface into the packaging bag, reducing heat accumulation at the interface, and consequently widening the hot-oven window of the battery and improving the hot-oven test pass rate of the battery. This also reduces the probability of deformation of the electrode assembly after charge-and-discharge cycling of the battery, thereby enabling the battery to achieve superior electrochemical performance.

In some embodiments, the first coating layer may further include a thickener, a wetting agent, and the like. The thickener is not particularly limited herein. For example, the thickener may be at least one of sodium carboxymethyl cellulose, hydroxyethyl cellulose, hydroxypropyl methyl cellulose, methyl hydroxyethyl cellulose, or ethyl hydroxyethyl cellulose. The wetting agent is not particularly limited herein. For example, the wetting agent may be at least one of polyoxyethylene ether, dimethyl siloxane, sucrose ester, or sodium alkyl ether sulfate.

In some embodiments, the first coating layer is disposed on one surface of the porous substrate, the surface facing the positive electrode plate. This widens the hot-oven window of the battery, and improves the hot-oven test pass rate of the battery.

In some embodiments, one surface of the porous substrate is provided with a first coating layer, and another surface of the porous substrate is provided with a second coating layer. Optionally, the first coating layer is disposed on one surface of the porous substrate, the surface facing the positive electrode plate; and the second coating layer is disposed on one surface of the porous substrate, the surface facing the negative electrode plate.

The second coating layer includes a third polymer. The third polymer may include at least one of a homopolymer or a copolymer of at least one monomer selected from butyl acrylate, octyl acrylate, isooctyl acrylate, styrene, or butadiene. The third polymer may include a homopolymer, a copolymer, or a blend thereof.

This can reduce the probability of deformation of the electrode assembly after charge-and-discharge cycling of the battery, thereby endowing the battery with superior electrochemical performance.

In some embodiments, the melting point of the third polymer may be 50 °C to 70 °C.

The thickness of the second coating layer is not particularly limited herein, as long as the objectives of this application can be achieved. For example, the thickness of the second coating layer may be 0.5 µm to 3 µm.

The coating weight of the second coating layer is not particularly limited herein, as long as the objectives of this application can be achieved. For example, the coating weight of the second coating layer may be 0.5 mg/5000 mm² to 3 mg/5000 mm².

In some embodiments, an inorganic coating layer may be disposed between the porous substrate and the first coating layer. The inorganic coating layer disposed between the porous substrate and the first coating layer can also improve the thermal shrinkage resistance, puncture resistance, and/or electrolyte transport performance of the separator.

In some embodiments, the inorganic coating layer may include a ceramic. The ceramic may include, but is not limited to, at least one of aluminum oxide, boehmite, titanium dioxide, silicon dioxide, zirconium dioxide, tin dioxide, magnesium hydroxide, magnesium oxide, zinc oxide, barium sulfate, boron nitride, or aluminum nitride.

In some embodiments, the inorganic coating layer may further include a binder. The type of the binder is not particularly limited herein. For example, the binder may include at least one of polyacrylate ester, polyimide, polyamide, polyamide imide, polyvinylidene fluoride, styrene-butadiene rubber, sodium alginate, polyvinyl alcohol, polytetrafluoroethylene, polyacrylonitrile, sodium carboxymethyl cellulose, potassium carboxymethyl cellulose, sodium hydroxypropyl cellulose, or potassium hydroxypropyl cellulose.

The thickness of the inorganic coating layer is not particularly limited herein, as long as the objectives of this application can be achieved. For example, the thickness of the inorganic coating layer may be 0.5 µm to 6 µm.

The coating weight of the inorganic coating layer is not particularly limited herein, as long as the objectives of this application can be achieved. For example, the coating weight of the inorganic coating layer may be 3 mg/5000 mm² to 20 mg/5000 mm².

The substrate of the separator is not particularly limited herein, as long as the objectives of this application can be achieved. For example, the substrate of the separator may be a nonwoven fabric, a film, or a composite film, each assuming a porous structure. The material of the substrate of the separator may include at least one of polyethylene, polypropylene, polyethylene terephthalate, polyimide, polyamide, spandex, or aramid. Optionally, the substrate layer may be a polypropylene porous film, a polyethylene porous film, a polypropylene non-woven fabric, a polyethylene non-woven fabric, or a polypropylene-polyethylene-polypropylene porous composite film.

The separator may be prepared by using the following method: stirring a first polymer, a second polymer, and a solvent thoroughly to obtain a first organic coating layer slurry; applying the first organic coating layer slurry onto at least one surface of the porous substrate, and drying the slurry to obtain a separator.

In some embodiments, the first coating layer slurry may further include a thickener, a wetting agent, and the like.

### Electrochemical device

An embodiment of this application further provides an electrochemical device. The electrochemical device includes the battery disclosed in any one of the above embodiments.

In an embodiment, the electrochemical device includes a shell. The battery is disposed in the shell. The number of batteries may be plural. The plurality of batteries are disposed in the shell.

In an embodiment, the electrochemical device may be a battery module or a battery pack.

### Electronic device

An embodiment of this application further provides an electronic device. The electronic device includes the battery and/or electrochemical device disclosed in any one of the above embodiments.

The electronic device is not particularly limited herein, and may be any electronic device known in the prior art. In some embodiments, the types of the electronic device may include, but are not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, lithium-ion capacitor, or the like.

### Embodiments

The following embodiments are more detailed descriptions of the subject-matter disclosed herein. The embodiments are merely intended as illustrative descriptions because, evidently, a person skilled in the art may make various modifications and changes to such embodiments without departing from what is disclosed herein. Unless otherwise specified, all fractions, percentages, and ratios mentioned in the following embodiments are values by mass. All reagents used in the embodiments are commercially available or can be synthesized according to conventional methods, and can be directly put into use without a need of further processing. All the instruments used in the embodiments are commercially available.

### Performance Test

### (1) Test of the melting points of the first polymer and the second polymer

The melting points of the first polymer and the second polymer are tested by using a differential scanning calorimetry (DSC) instrument. The mass of the sample may be 8 mg to 15 mg, the test temperature range is 25 °C to 400 °C, and the heating rate is 10 °C/min.

### (2) Test of weight-average molecular weights of the first polymer and the second polymer

The weight-average molecular weights of the first polymer and the second polymer are measured by using gel permeation chromatography (GPC).

### (3) Test of the volume distribution particle sizes of particles of the first polymer and particles of the second polymer

The volume distribution particle sizes of the particles of the first polymer and the second polymer are measured with reference to GB/T 19077-2016. The test instrument may be a laser particle size analyzer, such as Mastersizer 3000 laser particle size analyzer manufactured by Malvern Instruments Ltd., UK.

### (4) Hot-oven test

A lithium-ion battery is left to stand for 5 minutes at 25 °C, charged at a constant current of 0.5C until the voltage reaches 4.5 V, and then charged at a constant voltage of 4.5 V until the current tapers off to 0.025C. The lithium-ion battery is left to stand for 60 minutes, and is then subjected to a hot-oven test. Before the hot-oven test, the appearance of the lithium-ion battery is checked and photographed. A temperature sensing wire is affixed to the battery, and the lithium-ion battery is placed vertically in a hot oven, heated from 25 °C to 130 °C at a rate of 5 °C/min, and kept at this temperature for 60 minutes. The lithium-ion battery is considered to have passed the test if the battery does not catch fire or explode. 100 lithium-ion batteries are tested as samples. The number of batteries passing the hot-oven test is counted, and the hot-oven test pass rate is calculated.

### (5) Measurement of the thickness of the lithium-ion battery

A lithium-ion battery is left to stand for 5 minutes at 25 °C, charged at a constant current of 0.5C until the voltage reaches 4.5 V, and then charged at a constant voltage of 4.5 V until the current tapers off to 0.025C. The lithium-ion battery is left to stand for 60 minutes, and is then measured to obtain a thickness, denoted as D₁, that is, a thickness before a hot-oven test.

The lithium-ion battery that has been subjected to the hot-oven test is taken out, cooled to 25 °C, and then measured again to obtain a thickness, denoted as D₂.

The thickness of the lithium-ion battery may be measured by using a laser thickness gauge. To ensure accuracy of the test results, 5 lithium-ion battery samples may be taken for testing in each embodiment and each comparative embodiment, and 3 points may be taken on each lithium-ion battery sample to obtain three measured values. The measured values are averaged out.

### (6) Test of the adhesion force between the first coating layer of the separator and the electrode plate adjacent to the first coating layer

The test may be performed with reference to the standard GB/T 2790-1995.

The lithium-ion battery that has undergone the above hot-oven test is taken out and cooled to 25 °C, and then a separator and an electrode plate are taken out together from the disassembled lithium-ion battery, and cut into small strips of 15 mm×54.2 mm. Subsequently, the adhesion force between the first coating layer of the separator and the electrode plate adjacent to the first coating layer is measured according to a 180° peel test standard, denoted as T. The test instrument is a universal tensile testing machine. After the test, a ratio of the average force in a plateau of the peel force curve to the width of the sample is used as an adhesion force T between the first coating layer of the separator and the electrode plate adjacent to the first coating layer. The tensile speed (that is, peeling speed) of the tensile testing machine may be 50 mm/min. To ensure accuracy of the test results, 5 lithium-ion battery samples may be taken for testing in each embodiment and each comparative embodiment, and the measured values are averaged out as a test result.

In the following embodiments and comparative embodiments, the adhesion force T measured in Embodiments 1 to 13 is the adhesion force between the first coating layer of the separator and the negative electrode plate; and the adhesion force T measured in other embodiments and comparative embodiments is the adhesion force between the first coating layer of the separator and the positive electrode plate.

### (7) Test of the cycle performance

The test temperature is 12 °C.

A lithium-ion battery is left to stand for 5 minutes, charged at a constant current of 2C until the voltage reaches 4.45 V, and then charged at a constant voltage until the current tapers off to 0.05C. The lithium-ion battery is left to stand for 5 minutes, and then discharged at a constant current of 0.2C until the voltage drops to 3.0 V. The above operations are repeated for 3 cycles (in each cycle, the battery is charged at 2C and discharged at 0.2C), and the discharge capacity of the battery at the end of the 3^{rd} cycle is recorded.

The lithium-ion battery is left to stand for 5 minutes, and then charged at a constant current of 2C until the voltage reaches 4.45 V, and then charged at a constant voltage until the current tapers off to 0.05C. The lithium-ion battery is left to stand for 5 minutes, and then discharged at a constant current of 1C until a voltage of 3.0 V. The above operations are repeated for 47 cycles (in each cycle, the battery is charged at 2C and discharged at 1C).

The lithium-ion battery is left to stand for 5 minutes, and then charged at a constant current of 2C until the voltage reaches 4.45 V, and then charged at a constant voltage until the current tapers off to 0.05C. The lithium-ion battery is left to stand for 5 minutes, and then discharged at a constant current of 0.2C until a voltage of 3.0 V. The above operations are repeated for 750 cycles (in each cycle, the battery is charged at 2C and discharged at 0.2C). The battery is cycled for 800 cycles in total. The discharge capacity at the end of the 800^{th} cycle is recorded.

800^{th}-cycle capacity retention rate of the lithium-ion battery (%) = (800^{th}-cycle discharge capacity/3^{rd}-cycle discharge capacity) × 100%.

To ensure accuracy of the test results, 5 lithium-ion battery samples may be taken for testing in each embodiment and each comparative embodiment, and the measured values are averaged out as a test result.

### Embodiment 1-1

### (1) Preparation of a separator

Boehmite (with a volume median diameter Dv50 being 1 µm) and a polyacrylate binder are dispersed in deionized water at a mass ratio of 90 : 10 to form an inorganic coating layer slurry in which the solid content is 50%. The inorganic coating layer slurry is applied evenly onto one side of a 5 µm-thick PE porous substrate by using a micro-gravure coating method. The slurry is dried in an oven to obtain an inorganic coating layer. The thickness of the inorganic coating layer is 2 µm.

The first polymer (polymer particles that use propylene as a base monomer) and a second polymer (polymer particles that use vinylidene fluoride as a base monomer) shown in Table 1 are added into a stirrer and stirred well. Sodium carboxymethyl cellulose is added into the stirrer and stirred well. A wetting agent dimethyl siloxane is added into the stirrer, and then deionized water is added and stirred well. The viscosity of the slurry is adjusted to 40 mPa·s and the solid content is adjusted to 5%, thereby obtaining a first coating layer slurry. The first coating layer slurry is applied evenly onto the inorganic coating layer and dried in an oven to obtain a first coating layer. The coating weight of the first coating layer slurry is 1 mg/5000 mm². The thickness of the first coating layer is 1.5 µm. The mass ratio between the first polymer, the second polymer, sodium carboxymethyl cellulose, and dimethyl siloxane is 75 : 20 : 0.5 : 4.5. In Table 1, Tₘ₁ represents the melting point of the first polymer, and Tₘ₂ represents the melting point of the second polymer. M_{w1} represents the weight-average molecular weight of the first polymer, and M_{w2} represents the weight-average molecular weight of the second polymer. Dv₍₁₎50 and Dv₍₁₎90 represent the volume distribution particle sizes of the particles of the first polymer, and Dv₍₂₎50 represents the volume distribution particle size of the particles of the second polymer. m1 represents the mass percent of the first polymer, and m2 represents the mass percent of the second polymer, both based on the total mass of the first coating layer.

Poly(styrene-co-butyl acrylate-co-isooctyl acrylate) is added as a third polymer into a stirrer, and then sodium carboxymethyl cellulose is added and stirred well. Dimethylsiloxane is added as a wetting agent into the stirrer, and then deionized water is added and stirred. The viscosity of the slurry is adjusted to 40 mPa·s, and the solid content is adjusted to 5% to obtain a second coating layer slurry. The second coating layer slurry is applied evenly onto the other side of the PE porous substrate, and dried in an oven to obtain a second coating layer. The coating weight of the second coating layer slurry is 1 mg/5000 mm². The thickness of the second coating layer is 1.5 µm. The mass ratio between the third polymer, sodium carboxymethyl cellulose, and dimethyl siloxane is 95 : 0.5 : 4.5.

### (2) Preparation of a negative electrode plate

Artificial graphite, acetylene black, styrene-butadiene rubber, and sodium carboxymethyl cellulose are mixed at a mass ratio of 96 : 1: 1.5: 1.5, and then deionized water is added as a solvent to formulate a slurry in which the solid content is 70%, and the slurry is stirred well. The slurry is applied evenly onto one surface of 8 µm-thick copper foil, and dried at 110 °C. The foil is cold-pressed to obtain a negative electrode plate coated with a 150 µm-thick negative electrode film layer on a single side. Subsequently, the above steps are repeated on the other surface of the copper foil to obtain a negative electrode plate coated on both sides. The negative electrode plate is cut into a size of 74 mm × 867 mm, and tabs are welded to the electrode plate so that the electrode plate is ready for use.

### (3) Preparation of a positive electrode plate

LiCoO₂, acetylene black, and polyvinylidene fluoride (PVDF) are mixed at a mass ratio of 94 : 3 : 3, and then N-methyl-pyrrolidone (NMP) is added as a solvent to formulate a slurry in which the solid content is 75%. The slurry is stirred well. The slurry is applied evenly onto one surface of 12 µm-thick aluminum foil, and dried at 90 °C. The foil is cold-pressed to obtain a positive electrode plate coated with a 100 µm-thick positive electrode film layer on a single side. Subsequently, the above steps are repeated on the other surface of the aluminum foil to obtain a positive electrode plate coated on both sides. The positive electrode plate is cut into a size of 74 mm × 867 mm, and then tabs are welded to the electrode plate to obtain a positive electrode plate ready for use.

### (4) Preparation of an electrolyte solution

Ethylene carbonate (EC), diethyl carbonate (DEC), propylene carbonate (PC), propyl propionate (PP), and vinylene carbonate (VC) are mixed at a mass ratio of 20 : 30 : 20 : 28 : 2 in an environment with a water content less than 10 ppm, and then LiPF₆ is added and mixed well to obtain an electrolyte solution. The mass percent of the LiPF₆ in the electrolyte solution is 8%.

### (5) Preparation of a lithium-ion battery

The positive electrode plate, separator, and negative electrode plate prepared above are stacked sequentially such that the first coating layer of the separator is in contact with the positive electrode plate. The stacked structure is wound to obtain an electrode assembly. The electrode assembly is placed into an aluminum laminated film packaging bag, dehydrated at 80 °C, and then filled with the prepared electrolyte solution. Steps such as vacuum sealing, standing, hot pressing, chemical formation, and shaping are performed to obtain a pouch-type lithium-ion battery.

### Embodiments 1-2 to 1-12

The preparation process is the same as that in Embodiment 1-1 except that the melting point and weight-average molecular weight of the first polymer and/or the melting point and weight-average molecular weight of the second polymer are different during preparation of the separator. Specific parameters are shown in Table 1.

### Embodiment 1-13

The preparation process is the same as that in Embodiment 1-1 except that the first coating layer of the separator is in contact with the negative electrode plate during preparation of the lithium-ion battery.

### Embodiment 1-14

The preparation process is the same as that in Embodiment 1-1 except the preparation process of the separator.

### (1) Preparation of a separator

Boehmite (with a volume median diameter Dv50 being 1 µm) and a polyacrylate binder are dispersed in deionized water at a mass ratio of 90 : 10 to form an inorganic coating layer slurry in which the solid content is 50%. The inorganic coating layer slurry is applied evenly onto both surfaces of a 5 µm-thick PE porous substrate by using a micro-gravure coating method. The slurry is dried in an oven to obtain an inorganic coating layer. The thickness of the inorganic coating layer (on a single side) is 2 µm.

The first polymer (polymer particles that use propylene as a base monomer) and a second polymer (polymer particles that use vinylidene fluoride as a base monomer) shown in Table 1 are added into a stirrer and stirred well. Sodium carboxymethyl cellulose is added into the stirrer and stirred well. A wetting agent dimethyl siloxane is added into the stirrer, and then deionized water is added and stirred well. The viscosity of the slurry is adjusted to 40 mPa·s and the solid content is adjusted to 5%, thereby obtaining a first coating layer slurry. The first coating layer slurry is applied evenly onto the inorganic coating layer and dried in an oven to obtain a first coating layer. The coating weight of the first coating layer slurry (on a single side) is 1 mg/5000 mm². The thickness of the first coating layer (on a single side) is 1.5 µm. The mass ratio between the first polymer, the second polymer, sodium carboxymethyl cellulose, and dimethyl siloxane is 75 : 20 : 0.5 : 4.5. In Table 1, Tₘ₁ represents the melting point of the first polymer, and Tₘ₂ represents the melting point of the second polymer. M_{w1} represents the weight-average molecular weight of the first polymer, and M_{w2} represents the weight-average molecular weight of the second polymer. Dv₍₁₎50 and Dv₍₁₎90 represent the volume distribution particle sizes of the particles of the first polymer, and Dv₍₂₎50 represents the volume distribution particle size of the particles of the second polymer. m1 represents the mass percent of the first polymer, and m2 represents the mass percent of the second polymer, both based on the total mass of the first coating layer.

### Embodiment 1-15

The preparation process is the same as that in Embodiment 1-1 except that the melting point and weight-average molecular weight of the first polymer are different during preparation of the separator. Specific parameters are shown in Table 1.

### Comparative Embodiment 1

The preparation process is the same as that in Embodiment 1-1 except the preparation process of the separator.

Boehmite (with a volume median diameter Dv50 being 1 µm) and a polyacrylate binder are dispersed in deionized water at a mass ratio of 90 : 10 to form an inorganic coating layer slurry in which the solid content is 50%. The inorganic coating layer slurry is applied evenly onto one side of a 5 µm-thick PE porous substrate by using a micro-gravure coating method. The slurry is dried in an oven to obtain an inorganic coating layer. The thickness of the inorganic coating layer is 2 µm.

The first polymer (polymer particles that use propylene as a base monomer) shown in Table 1 is added into a stirrer and stirred well. Sodium carboxymethyl cellulose is added into the stirrer and stirred well. A wetting agent dimethyl siloxane is added into the stirrer, and then deionized water is added and stirred well. The viscosity of the slurry is adjusted to 40 mPa·s and the solid content is adjusted to 5%, thereby obtaining a first coating layer slurry. The first coating layer slurry is applied evenly onto the inorganic coating layer and dried in an oven to obtain a first coating layer. The coating weight of the first coating layer slurry is 1 mg/5000 mm². The thickness of the first coating layer is 1.5 µm. The mass ratio between the first polymer, sodium carboxymethyl cellulose, and dimethyl siloxane is 95 : 0.5 : 4.5.

Poly(styrene-co-butyl acrylate-co-isooctyl acrylate) is added as a third polymer into a stirrer, and then sodium carboxymethyl cellulose is added and stirred well. Dimethylsiloxane is added as a wetting agent into the stirrer, and then deionized water is added and stirred. The viscosity of the slurry is adjusted to 40 mPa·s, and the solid content is adjusted to 5% to obtain a second coating layer slurry. The second coating layer slurry is applied evenly onto the other side of the PE porous substrate, and dried in an oven to obtain a second coating layer. The coating weight of the second coating layer slurry is 1 mg/5000 mm². The thickness of the second coating layer is 1.5 µm. The mass ratio between the third polymer, sodium carboxymethyl cellulose, and dimethyl siloxane is 95 : 0.5 : 4.5.

As can be seen from the test results in Table 1, the battery that satisfies 0.077 ≤ (3.0 - D₂/D₁)/T ≤ 0.118 can achieve a relatively high hot-oven test pass rate and superior electrochemical performance concurrently.

The battery prepared in Comparative Embodiment 1 fails to satisfy 0.077 ≤ (3.0 - D₂/D₁)/T ≤ 0.118, and therefore, the battery fails to achieve a relatively high hot-oven test pass rate and superior electrochemical performance concurrently.

The first coating layer of the separator prepared in Comparative Embodiment 1 adopts only the first polymer that melts at a relatively low melting point. The fluidity of the first polymer is relatively high after the first polymer is softened by heat during preparation of the battery (such as baking, hot pressing, or chemical formation of the electrode assembly, or other processes) and during normal use of the battery, thereby leading to a relatively high risk of pore clogging of the separator. Therefore, the electrochemical performance of the battery prepared in Comparative Embodiment 1 is inferior. In addition, the interface between the electrode plate and the separator of the battery prepared in Comparative Embodiment 1 is unable to be opened or sufficiently opened when the battery is in a heat generation stage. Consequently, the gas and heat at the interface are unable to be transmitted into the packaging bag in time, so that the heat keeps accumulating at the interface. Therefore, the hot-oven test pass rate of the battery prepared in Comparative Embodiment 1 is relatively low.

As can be seen from the test results of Embodiments 1-1 to 1-15, by further setting the melting point Tₘ₁ of the first polymer, the melting point Tₘ₂ of the second polymer, and the difference Tₘ₂-Tₘ₁ to fall within the specified ranges, this application can further improve the overall performance of the battery.

**Table 1 (To be continued)**

| Serial number | First polymer | | | | | | Second polymer | | | | |
|---|---|---|---|---|---|---|---|---|---|---|---|
| | Monomer | Tₘ₁ (°C) | M_{w1} (×10,000) | Dv₍₁₎50 (µm) | Dv₍₁₎90 (µm) | ml (%) | Monomer | Tₘ₂ (°C) | M_{w2} (×10,000) | Dv₍₂₎50 (µm) | m2 (%) |
| Comparative Embodiment 1 | Propylene | 80 | 20 | 0.5 | 3 | 95 | / | / | / | / | / |
| Embodiment 1-1 | Propylene | 80 | 20 | 1.2 | 3 | 75 | Vinylidene fluoride | 140 | 150 | 0.80 | 20 |
| Embodiment 1-2 | Propylene | 40 | 10 | 1.2 | 3 | 75 | Vinylidene fluoride | 140 | 150 | 0.80 | 20 |
| Embodiment 1-3 | Propylene | 60 | 15 | 1.2 | 3 | 75 | Vinylidene fluoride | 140 | 150 | 0.80 | 20 |
| Embodiment 1-4 | Propylene | 70 | 18 | 1.2 | 3 | 75 | Vinylidene fluoride | 140 | 150 | 0.80 | 20 |
| Embodiment 1-5 | Propylene | 90 | 23 | 1.2 | 3 | 75 | Vinylidene fluoride | 140 | 150 | 0.80 | 20 |
| Embodiment 1-6 | Propylene | 100 | 26 | 1.2 | 3 | 75 | Vinylidene fluoride | 140 | 150 | 0.80 | 20 |
| Embodiment 1-7 | Propylene | 80 | 20 | 1.2 | 3 | 75 | Vinylidene fluoride | 120 | 90 | 0.80 | 20 |
| Embodiment 1-8 | Propylene | 80 | 20 | 1.2 | 3 | 75 | Vinylidene fluoride | 130 | 118 | 0.80 | 20 |
| Embodiment 1-9 | Propylene | 80 | 20 | 1.2 | 3 | 75 | Vinylidene fluoride | 135 | 134 | 0.80 | 20 |
| Embodiment 1-10 | Propylene | 80 | 20 | 1.2 | 3 | 75 | Vinylidene fluoride | 150 | 181 | 0.80 | 20 |
| Embodiment 1-11 | Propylene | 80 | 20 | 1.2 | 3 | 75 | Vinylidene fluoride | 160 | 200 | 0.80 | 20 |
| Embodiment 1-12 | Propylene | 80 | 20 | 1.2 | 3 | 75 | Vinylidene fluoride | 200 | 250 | 0.80 | 20 |
| Embodiment 1-13 | Propylene | 80 | 20 | 1.2 | 3 | 75 | Vinylidene fluoride | 140 | 150 | 0.80 | 20 |
| Embodiment 1-14 | Propylene | 80 | 20 | 1.2 | 3 | 75 | Vinylidene fluoride | 140 | 150 | 0.80 | 20 |
| Embodiment 1-15 | Propylene | 110 | 30 | 1.2 | 3 | 75 | Vinylidene fluoride | 140 | 150 | 0.80 | 20 |
| Comparative Embodiment 1 | / | / | | / | | 5 | 1.50 | 9.50 | 0.158 | 50% | 76.00% |
| Embodiment 1-2 | 100 | 0.67 | | 3.75 | | 5 | 2.40 | 7.78 | 0.077 | 100% | 78.50% |
| Embodiment 1-3 | 80 | 0.67 | | 3.75 | | 5 | 2.32 | 7.79 | 0.087 | 100% | 79.60% |
| Embodiment 1-4 | 70 | 0.67 | | 3.75 | | 5 | 2.25 | 7.80 | 0.096 | 100% | 81.50% |
| Embodiment 1-5 | 50 | 0.67 | | 3.75 | | 5 | 2.26 | 7.0 | 0.106 | 96% | 82.60% |
| Embodiment 1-6 | 40 | 0.67 | | 3.75 | | 5 | 2.20 | 6.78 | 0.118 | 90% | 80.60% |
| Embodiment 1-7 | 40 | 0.67 | | 3.75 | | 5 | 2.12 | 7.80 | 0.113 | 82% | 81.10% |
| Embodiment 1-8 | 50 | 0.67 | | 3.75 | | 5 | 2.15 | 7.68 | 0.111 | 84% | 82.00% |
| Embodiment 1-9 | 55 | 0.67 | | 3.75 | | 5 | 2.22 | 7.56 | 0.103 | 90% | 82.90% |
| Embodiment 1-10 | 70 | 0.67 | | 3.75 | | 5 | 2.32 | 6.40 | 0.106 | 100% | 84.50% |
| Embodiment 1-11 | 80 | 0.67 | | 3.75 | | 5 | 2.35 | 5.91 | 0.110 | 100% | 82.60% |
| Embodiment 1-12 | 120 | 0.67 | | 3.75 | | 5 | 2.38 | 5.43 | 0.114 | 100% | 80.40% |
| Embodiment 1-13 | 60 | 0.67 | | 3.75 | | 5 | 2.13 | 7.81 | 0.111 | 88% | 81.80% |
| Embodiment 1-14 | 60 | 0.67 | | 3.75 | | 5 | 2.16 | 7.69 | 0.109 | 96% | 82.70% |
| Embodiment 1-15 | 30 | 0.67 | | 3.75 | | 5 | 2.22 | 6.73 | 0.116 | 84% | 79.50% |

### Embodiments 2-1 to 2-15

In Embodiments 2-1 to 2-13, the preparation process is the same as that in Embodiment 1-1 except that the volume distribution particle sizes Dv₍₁₎50 and Dv₍₁₎90 of the first polymer or the volume distribution particle size Dv₍₂₎50 of the second polymer during preparation of the separator is different. Specific parameters are shown in Table 2.

The preparation process in Embodiments 2-14 to 2-15 is the same as that in Embodiment 2-3 except that the volume distribution particle size Dv₍₂₎50 of the second polymer and the melting point Tₘ₂ of the second polymer during preparation of the separator are different. Specific parameters are shown in Table 2.

**Table 2**

| Serial number | First polymer | | | Second polymer | | Tₘ₂-Tₘ₁ (°C) | Dv₍₂₎50/Dv₍₁₎50 | Dv₍₁₎90/Dv₍₂₎50 | Di (mm) | D₂/D₁ | Adhesion force T (N/m) | (3.0-D₂/D₁)/T | Hot-oven test pass rate | 800^{th}-cycle capacity retention rate |
|---|---|---|---|---|---|---|---|---|---|---|---|---|---|---|
| | Dv₍₁₎50 (µm) | Dv₍₁₎90 (µm) | Tₘ₁ (°C) | Dv₍₂₎50 (µm) | Tₘ₂ (°C) | | | | | | | | | |
| Embodiment 2-1 | 1.2 | 3 | 80 | 0.50 | 140 | 60 | 0.42 | 6.00 | 5 | 2.18 | 8.68 | 0.094 | 80% | 80.20% |
| Embodiment 2-2 | 1.2 | 3 | 80 | 0.60 | 140 | 60 | 0.50 | 5.00 | 5 | 2.20 | 8.39 | 0.095 | 92% | 81.30% |
| Embodiment 2-3 | 1.2 | 3 | 80 | 0.72 | 140 | 60 | 0.60 | 4.17 | 5 | 2.21 | 7.91 | 0.100 | 97% | 82.60% |
| Embodiment 2-4 | 1.2 | 3 | 80 | 1.00 | 140 | 60 | 0.83 | 3.00 | 5 | 2.27 | 6.97 | 0.105 | 100% | 82.80% |
| Embodiment 2-5 | 1.2 | 3 | 80 | 1.20 | 140 | 60 | 1.00 | 2.50 | 5 | 2.29 | 6.58 | 0.108 | 100% | 82.10% |
| Embodiment 2-6 | 1.2 | 3 | 80 | 1.50 | 140 | 60 | 1.25 | 2.00 | 5 | 2.32 | 6.04 | 0.113 | 100% | 81.10% |
| Embodiment 2-7 | 1.2 | 3 | 80 | 1.80 | 140 | 60 | 1.50 | 1.67 | 5 | 2.36 | 5.56 | 0.115 | 95% | 80.80% |
| Embodiment 2-8 | 0.5 | 1.3 | 80 | 0.34 | 140 | 60 | 0.67 | 3.82 | 5 | 2.12 | 7.88 | 0.112 | 78% | 80.05% |

| Serial number | First polymer | | | Second polymer | | Tₘ₂-Tₘ₁ (°C) | Dv₍₂₎50/Dv₍₁₎50 | Dv₍₁₎90/Dv₍₂₎50 | D₁ (mm) | D₂/D₁ | Adhesion force T (N/m) | (3.0-D₂/D₁)/T | Hot-oven test pass rate | 800^{th}-cycle capacity retention rate |
|---|---|---|---|---|---|---|---|---|---|---|---|---|---|---|
| | Dv₍₁₎50 (µm) | Dv₍₁₎90 (µm) | Tₘ₁ (°C) | Dv₍₂₎50 (µm) | Tₘ₂ (°C) | | | | | | | | | |
| Embodiment 2-9 | 0.8 | 2 | 80 | 0.54 | 140 | 60 | 0.67 | 3.70 | 5 | 2.17 | 7.51 | 0.111 | 82% | 81.70% |
| Embodiment 2-10 | 1 | 2.5 | 80 | 0.67 | 140 | 60 | 0.67 | 3.73 | 5 | 2.21 | 7.38 | 0.107 | 94% | 82.50% |
| Embodiment 2-11 | 1.5 | 3.8 | 80 | 1.01 | 140 | 60 | 0.67 | 3.76 | 5 | 2.35 | 6.52 | 0.100 | 100% | 84.10% |
| Embodiment 2-12 | 2 | 5 | 80 | 1.34 | 140 | 60 | 0.67 | 3.73 | 5 | 2.38 | 6.16 | 0.101 | 100% | 82.50% |
| Embodiment 2-13 | 2.2 | 5.5 | 80 | 1.47 | 140 | 60 | 0.67 | 3.74 | 5 | 2.42 | 5.42 | 0.107 | 100% | 81.40% |
| Embodiment 2-14 | 1.2 | 3 | 80 | 0.50 | 210 | 130 | 0.42 | 6.00 | 5 | 2.18 | 8.90 | 0.093 | 80% | 79.80% |
| Embodiment 2-15 | 1.2 | 3 | 80 | 1.80 | 110 | 30 | 1.50 | 1.67 | 5 | 2.39 | 5.50 | 0.111 | 70% | 80.10% |

As can be seen from the test results of Embodiment 1-1 and Embodiments 2-1 to 2-13, by further setting one or more of the volume distribution particle sizes Dv₍₁₎50 and Dv₍₁₎90 of the particles of the first polymer, the volume distribution particle size Dv₍₂₎50 of the particles of the second polymer, Dv₍₂₎50/Dv₍₁₎50, or Dv₍₁₎90/Dv₍₂₎50, this application can further improve the overall performance of the battery.

As can be seen from the test results of Embodiments 2-14 to 2-15, by further adjusting the difference between the melting point of the second polymer and the melting point of the second polymer, denoted as Tₘ₂₋Tₘ₁ and adjusting the volume distribution particle sizes of the particles of the first polymer and the second polymer such that Dv₍₂₎50/Dv₍₁₎50 and Dv₍₁₎90/Dv₍₂₎50 fall within the specified ranges, this application can further improve the hot-oven test pass rate of the battery and the cycle performance of the battery.

### Embodiments 3-1 to 3-7

The preparation process is the same as that in Embodiment 1-1 except that the mass percent of the first polymer and the mass percent of the second polymer are different during preparation of the separator. Specific parameters are shown in Table 3.

**Table 3**

| Serial number | First polymer | Second polymer | D₁ (mm) | D₂/D₁ | Adhesion force T (N/m) | (3.0-D₂/D₁)/T | Hot-oven test pass rate | 800^{th}-cycle capacity retention rate |
|---|---|---|---|---|---|---|---|---|
| | m1 (%) | m2 (%) | | | | | | |
| Embodiment 3-1 | 35 | 60 | 5 | 2.36 | 5.72 | 0.112 | 100% | 79.80% |
| Embodiment 3-2 | 50 | 45 | 5 | 2.31 | 6.20 | 0.111 | 100% | 80.30% |
| Embodiment 3-3 | 65 | 30 | 5 | 2.29 | 6.68 | 0.106 | 100% | 81.60% |
| Embodiment 3-4 | 70 | 25 | 5 | 2.27 | 6.92 | 0.105 | 100% | 82.10% |
| Embodiment 3-5 | 82 | 13 | 5 | 2.24 | 7.56 | 0.101 | 100% | 81.80% |
| Embodiment 3-6 | 86 | 9 | 5 | 2.24 | 8.51 | 0.089 | 95% | 80.20% |
| Embodiment 3-7 | 90 | 5 | 5 | 2.20 | 9.10 | 0.088 | 86% | 78.10% |

As can be seen from the test results of Embodiment 1-1 and Embodiments 3-1 to 3-7, by further setting the mass percent m1 of the first polymer and the mass percent m2 of the second polymer in the first coating layer to fall within the specified ranges, this application can further improve the overall performance of the battery.

### Embodiments 4-1 to 4-6

The preparation process is the same as that in Embodiment 1-1 except that the coating weight of the first coating layer slurry and/or the thickness of the first coating layer is different during preparation of the separator. Specific parameters are shown in Table 4.

**Table 4**

| Serial number | First coating layer | | D₁ (mm) | D₂/D₁ | Adhesion force T (N/m) | (3.0-D₂/D₁)/T | Hot-oven test pass rate | 800^{th}-cycle capacity retention rate |
|---|---|---|---|---|---|---|---|---|
| | Coating weight (mg/5000 mm²) | Thickness (µm) | | | | | | |
| Embodiment 4-1 | 0.3 | 1.4 | 5 | 2.35 | 5.60 | 0.116 | 100% | 80.20% |
| Embodiment 4-2 | 0.5 | 1.5 | 5 | 2.33 | 6.08 | 0.110 | 100% | 82.50% |
| Embodiment 4-3 | 1.5 | 1.5 | 5 | 2.21 | 8.21 | 0.096 | 95% | 82.70% |
| Embodiment 4-4 | 2 | 1.5 | 5 | 2.18 | 9.82 | 0.084 | 92% | 82.20% |
| Embodiment 4-5 | 3 | 2.8 | 5.05 | 2.18 | 10.11 | 0.081 | 91% | 81.50% |
| Embodiment 4-6 | 5 | 2.8 | 5.05 | 2.17 | 10.23 | 0.081 | 90% | 80.40% |

As can be seen from the test results of Embodiment 1-1 and Embodiments 4-1 to 4-6, by further adjusting the coating weight and/or thickness of the first coating layer, this application can further improve the overall performance of the battery.

### Embodiments 5-1 to 5-5

The preparation process is the same as that in Embodiment 1-1 except that the types, the melting points, and the weight-average molecular weights of the first polymer and the second polymer are different during preparation of the separator. Specific parameters are shown in Table 5.

**Table 5**

| Serial number | First polymer | | | Second polymer | | | Tₘ₂-Tₘ₁ (°C) | D₁ (mm) | D₂/D₁ | Adhesion force T (N/m) | (3.0-D₂/D₁)/T | Hot-oven test pass rate | 800^{th}-cycle capacity retention rate |
|---|---|---|---|---|---|---|---|---|---|---|---|---|---|
| | Monomer | Tₘ₁ (°C) | M_{w1} (×10,000) | Monomer | Tₘ₂ (°C) | M_{w2} (×10,000) | | | | | | | |
| Embodiment 5-1 | Ethylene | 70 | 20 | Vinylidene fluoride | 140 | 150 | 70 | 5 | 2.27 | 7.5 | 0.097 | 100% | 82.30% |
| Embodiment 5-2 | Ethylene | 70 | 20 | Styrene | 130 | 120 | 60 | 5 | 2.23 | 7.4 | 0.104 | 100% | 82.50% |
| Embodiment 5-3 | Vinyl chloride | 80 | 22 | Styrene | 130 | 120 | 50 | 5 | 2.21 | 7.6 | 0.104 | 97% | 83.40% |
| Embodiment 5-4 | Vinyl chloride | 80 | 22 | Butadiene | 140 | 130 | 60 | 5 | 2.28 | 7.3 | 0.099 | 100% | 82.90% |
| Embodiment 5-5 | Propylene | 80 | 20 | Butadiene | 140 | 130 | 60 | 5 | 2.26 | 7.4 | 0.100 | 100% | 83.30% |

As can be seen from the test results of Embodiment 1-1 and Embodiments 5-1 to 5-5, different types of the first polymer and the second polymer produce different effects on improving the battery performance, but both polymers can make the battery achieve a relatively high hot-oven test pass rate and superior electrochemical performance.

In the above embodiments and comparative embodiments, both the first polymer and the second polymer are directly commercially available or may be obtained by performing polymerization reactions according to a method known in the art. The first polymer or the second polymer of different volume distribution particle sizes may be obtained by grinding and screening resin particles, where the resin particles result from the polymerization reactions or may be directly commercially purchased.

Described above are merely some specific embodiments of this application, but the protection scope of this application is not limited to such embodiments. Various equivalent modifications and replacements easily conceivable by any person skilled in the art without departing from the technical scope disclosed herein still fall within the protection scope of this application. Therefore, the protection scope of this application is subject to the protection scope of the claims.

## Claims

1. A battery, comprising an electrode assembly and a packaging bag, wherein the electrode assembly comprises an electrode plate and a separator, **characterized in that**
the separator comprises a porous substrate, a first coating layer is disposed on at least one surface of the porous substrate, and the first coating layer comprises a first polymer and a second polymer that melt at different melting points;
the battery satisfies: 0.077 ≤ (3.0 - D₂/D₁)/T ≤ 0.118, wherein D₁ is a thickness of the battery measured after the battery is fully charged at 25 °C, in units of mm; D₂ is a thickness of the battery measured again after the fully charged battery is placed vertically in a hot oven, heated at a rate of 5 °C/min from 25 °C to 130 °C and kept at 130°C for 60 minutes; then allowed to stand until a temperature of the battery drops to 25 °C, in units of mm; and T is an adhesion force between the first coating layer of the separator and an electrode plate adjacent to the first coating layer at the temperature of 25 °C, in units of N/m.

2. The battery according to claim 1, **characterized in that** the electrode plate comprises a positive electrode plate and a negative electrode plate, and the first coating layer is disposed on one surface of the porous substrate, the surface facing the positive electrode plate.

3. The battery according to claim 1, **characterized in that** the battery satisfies: 0.096 ≤ (3.0 - D₂/D₁)/T ≤ 0.110.

4. The battery according to any one of claims 1 to 3, **characterized in that**
T is 5.42 N/m to 10.23 N/m; and/or
D₂/D₁ is 2.12 to 2.42.

5. The battery according to claim 4, **characterized in that**
T is 5.91 N/m to 7.91 N/m; and/or
D₂/D₁ is 2.21 to 2.38.

6. The battery according to any one of claims 1 to 3, **characterized in that** a melting point of the first polymer is denoted as Tₘ₁, a melting point of the second polymer is denoted as Tₘ₂, Tₘ₁ is 60 °C to 100 °C, Tₘ₂ is greater than or equal to 130 °C, and Tₘ₂-Tₘ₁ is 40 °C to 120 °C.

7. The battery according to claim 6, **characterized in that** Tₘ₁ is 70 °C to 90 °C, Tₘ₂ is 135 °C to 160 °C, and Tₘ₂-Tₘ₁ is 50 °C to 80 °C.

8. The battery according to any one of claims 1 to 3, **characterized in that** a volume distribution particle size Dv₍₁₎50 of particles of the first polymer and a volume distribution particle size Dv₍₂₎50 of particles of the second polymer satisfy: 0.50 ≤ Dv₍₂₎50/Dv₍₁₎50 ≤ 1.25, and a volume distribution particle size Dv₍₁₎90 of the particles of the first polymer and the volume distribution particle size Dv₍₂₎50 of the particles of the second polymer satisfy: 2.0 ≤ Dv₍₁₎90/Dv₍₂₎50 ≤ 5.0.

9. The battery according to claim 8, **characterized in that** 0.60 ≤ Dv₍₂₎50/Dv₍₁₎50 ≤ 0.83, and 3.00 ≤ Dv₍₁₎90/Dv₍₂₎50 ≤ 4.17.

10. The battery according to any one of claims 1 to 3, **characterized in that** the first coating layer satisfies at least one of the following conditions:
(1) a volume distribution particle size Dv₍₁₎50 of particles of the first polymer is 0.8 µm to 2.0 µm;
(2) a volume distribution particle size Dv₍₁₎90 of particles of the first polymer is 2.0 µm to 5.0 µm; or
(3) a volume distribution particle size Dv₍₂₎50 of particles of the second polymer is 0.54 µm to 1.5 µm.

11. The battery according to any one of claims 1 to 3, **characterized in that** a mass percent of the first polymer is denoted as m1, and a mass percent of the second polymer is denoted as m2; and based on a total mass of the first coating layer, m1 is 50% to 86%, and m2 is 9% to 45%.

12. The battery according to claim 11, **characterized in that** m1 is 70% to 82%, and m2 is 13% to 25%.

13. The battery according to any one of claims 1 to 3, **characterized in that** a weight-average molecular weight of the first polymer is denoted as M_{w1}, a weight-average molecular weight of the second polymer is denoted as M_{w2}, M_{w1} is 150,000 to 260,000, and M_{w2} is 1,180,000 to 2,000,000.

14. The battery according to any one of claims 1 to 3, **characterized in that**
the first polymer comprises at least one of a homopolymer or a copolymer of at least one monomer selected from ethylene, propylene, vinylidene fluoride, acrylic acid, acrylic ester, styrene, acrylonitrile, maleic anhydride, vinyl chloride, or allyl chloride; and/or
the second polymer comprises at least one of a homopolymer or a copolymer of at least one monomer selected from vinylidene fluoride, hexafluoropropylene, propylene, vinyl chloride, styrene, butadiene, acrylate ester, or acrylic acid.

15. The battery according to any one of claims 1 to 3, **characterized in that** a first coating layer is disposed on one surface of the porous substrate, a second coating layer is disposed on another surface of the porous substrate, the second coating layer comprises a third polymer, the third polymer comprises at least one of a homopolymer or a copolymer of at least one monomer selected from butyl acrylate, octyl acrylate, isooctyl acrylate, styrene, or butadiene, and a melting point of the third polymer is 50 °C to 70 °C.

16. The battery according to any one of claims 1 to 3, **characterized in that** the separator satisfies at least one of the following conditions:
(1) a coating weight of the first coating layer is 0.5 mg/5000 mm² to 3 mg/5000 mm²; or
(2) a thickness of the first coating layer is 0.5 µm to 2.8 µm.

17. The battery according to claim 2, **characterized in that** the battery satisfies at least one of the following conditions:
(1) the battery is a pouch battery;
(2) the positive electrode plate comprises a positive active material, the positive active material comprises at least one of lithium cobalt oxide, lithium nickel cobalt aluminum oxide, lithium nickel cobalt manganese oxide, lithium iron phosphate, or respective modified compounds thereof, and the modification comprises doping modification, surface coating modification, and doping-and-coating modification; or
(3) the negative electrode plate comprises a negative active material, the negative active material comprises at least one of graphite or a silicon-based material, and a mass percent of the silicon-based material in the negative active material is 0% to 25%.

18. An electrochemical device, **characterized in that** the electrochemical device comprises the battery according to any one of claims 1 to 17.

19. An electronic device, **characterized in that** the electronic device comprises the battery according to any one of claims 1 to 17 or the electrochemical device according to claim 18.
